# EUROPEAN PATENT APPLICATION

(11) **EP 4 836 380 A1**
(43) Date of publication of application: **04.11.2026**
(21) Application number: 24910280.7
(22) Date of filing: 31.10.2024
(51) Int. Cl.: H04L 67/1074, G06F 16/27

(54) **BLOCKCHAIN SYSTEM MANAGEMENT METHOD AND BLOCKCHAIN NODE**

(30) Priority: 29.12.2023 CN 202311862986
(71) Applicant: Ant Blockchain Technology (Shanghai) Co., Ltd., Shanghai 200010 (CN)
(72) Inventor: ZHUO, Haizhen, Shanghai 200010 (CN); YAN, Ying, Shanghai 200010 (CN); JIANG, Guofei, Shanghai 200010 (CN)
(74) Representative: Winter, Brandl - Partnerschaft mbB
(86) International application number: PCT/CN2024/128770
(87) International publication number: WO 2025/139342

(57) **Abstract**

A management method for a blockchain system and a blockchain node are provided. The method comprises: receiving, by a first blockchain system from a client, a first transaction for invoking a first method function in a first rollup contract, wherein the first transaction includes identification information of an i-th second blockchain system; executing, by the first blockchain system, the first method function based on the first transaction to: determine at least one sovereignty migration record from global management information of the i-th second blockchain system, wherein the at least one sovereignty migration record includes identification information of a third blockchain system, and return the at least one sovereignty migration record to the client, wherein the at least one sovereignty migration record is used to support the client in obtaining at least one transaction sequence from the third blockchain system, and the at least one transaction sequence belongs to a transaction batch submitted during a period when the i-th second blockchain system uses the third blockchain system as its corresponding upper-layer blockchain system.

## Description

### CROSS-REFERENCE TO RELATED APPLICATIONS

This application claims priority to Chinese Patent Application No. 202311862986.9, filed with the China National Intellectual Property Administration on December 29, 2023, and entitled "MANAGEMENT METHOD FOR BLOCKCHAIN SYSTEM AND BLOCKCHAIN NODE," the entire contents of which are incorporated herein by reference.

### TECHNICAL FIELD

Embodiments of the present specification relate to the field of blockchain technology, and more particularly, to a management method for a blockchain system and a blockchain node.

### BACKGROUND

A blockchain system is a novel application model of computer technologies such as distributed data storage, peer-to-peer transmission, consensus mechanisms, and cryptographic algorithms. In a blockchain system, data blocks are linked sequentially in chronological order to form a chain-type data structure, thereby providing a distributed ledger that is cryptographically secured to be tamper-resistant and forgery-resistant. Due to characteristics such as decentralization, tamper-resistance of information, and autonomy, blockchain systems have received increasing attention and adoption.

### SUMMARY

An objective of the present disclosure is to provide a management method for a blockchain system and a blockchain node.

According to a first aspect, a sovereignty management method for a blockchain system is provided, the method comprising: receiving, by a first blockchain system from a client, a first transaction, wherein a first rollup contract comprising a first method function is deployed in the first blockchain system, the contract state of the first rollup contract stores global management information of N second blockchain systems, the first transaction is for invoking the first method function and includes identification information of an i-th second blockchain system; executing, by the first blockchain system, the first method function based on the first transaction to: determine, based on the identification information of the i-th second blockchain system, at least one sovereignty migration record from global management information thereof, wherein the sovereignty migration record includes identification information of a third blockchain system, and return the at least one sovereignty migration record to the client; receiving, by the third blockchain system from the client, a second transaction, wherein a second rollup contract comprising a second method function is deployed in the third blockchain system, the contract state of the second rollup contract includes management information of the i-th second blockchain system, the second transaction is for invoking the second method function and includes the identification information of the i-th second blockchain system; and executing, by the third blockchain system, the second method function based on the second transaction to: determine, based on the identification information of the i-th second blockchain system, at least one location index from the management information thereof, determine, based on the at least one location index, at least one transaction sequence stored in the third blockchain system, wherein the at least one transaction sequence belongs to a transaction batch submitted during a period when the i-th second blockchain system uses the third blockchain system as its corresponding upper-layer blockchain system, and return the at least one transaction sequence to the client.

According to a second aspect, a management method for a blockchain system is provided, the method being executed by a first blockchain system in which a first rollup contract is deployed, wherein the contract state of the first rollup contract stores global management information of N second blockchain systems, and the first rollup contract includes a first method function; the method comprising: receiving, from a client, a first transaction for invoking the first method function, wherein the first transaction includes identification information of an i-th second blockchain system; and executing the first method function based on the first transaction to: determine, based on the identification information of the i-th second blockchain system, at least one sovereignty migration record from global management information of the i-th second blockchain system, wherein the at least one sovereignty migration record includes identification information of a third blockchain system, and return the at least one sovereignty migration record to the client, thereby causing the client to obtain at least one transaction sequence from the third blockchain system, wherein the at least one transaction sequence belongs to a transaction batch submitted during a period when the i-th second blockchain system uses the third blockchain system as its corresponding upper-layer blockchain system.

According to a third aspect, a blockchain node in a first blockchain system is provided, wherein a first rollup contract is deployed in the first blockchain system, the first rollup contract includes a first method function, and the contract state of the first rollup contract stores global management information of N second blockchain systems, the blockchain node comprising: a transaction receiving unit configured to receive, from a client, a first transaction for invoking the first method function, wherein the first transaction includes identification information of an i-th second blockchain system; and a transaction execution unit configured to execute the first method function based on the first transaction to: determine, based on the identification information of the i-th second blockchain system, at least one sovereignty migration record from global management information of the i-th second blockchain system, wherein the at least one sovereignty migration record includes identification information of a third blockchain system, and return the at least one sovereignty migration record to the client, thereby causing the client to obtain, based on the at least one sovereignty migration record, at least one transaction sequence from the third blockchain system, wherein the at least one transaction sequence belongs to a transaction batch submitted during a period when the i-th second blockchain system uses the third blockchain system as its corresponding upper-layer blockchain system.

According to a fourth aspect, a computing device is provided, comprising a memory and a processor, wherein the memory stores executable code, and when the processor executes the executable code, the method described in the second aspect is implemented.

According to a fifth aspect, a non-transitory computer-readable storage medium is provided, on which a computer program is stored, and when the computer program is executed in a computing device, the computing device executes the method described in the second aspect.

In the technical solutions provided by the embodiments of the present specification, global management information of N second blockchain systems located at Layer 2, Layer 3, or even lower layers is maintained in a first blockchain system located at Layer 1, and sovereignty migration statuses of corresponding blockchain systems are recorded through sovereignty migration records in the global management information, thereby supporting, when any i-th second blockchain system needs to perform data recovery due to certain reasons, obtaining, through the sovereignty migration records, transaction sequences included in transaction batches used for data recovery from each blockchain system that once served as the upper-layer blockchain system corresponding to the i-th second blockchain system.

### BRIEF DESCRIPTION OF THE DRAWINGS

To more clearly illustrate the technical solutions of the embodiments of the present specification, the accompanying drawings required for describing the embodiments are briefly introduced below. Apparently, the accompanying drawings described below are merely some embodiments recorded in the present specification. For those of ordinary skill in the art, other accompanying drawings may also be derived from these accompanying drawings without creative effort.
FIG. 1 is a first schematic diagram illustrating principles of Layer 2 according to an embodiment;
FIG. 2 is a second schematic diagram illustrating principles of Layer 2 according to an embodiment;
FIG. 3 is a third schematic diagram illustrating principles of Layer 2 according to an embodiment;
FIG. 4 is a fourth schematic diagram illustrating principles of Layer 2 according to an embodiment;
FIG. 5 is a first schematic diagram of a multi-layer rollup network employing Rollup technology according to an embodiment;
FIG. 6 is a first schematic diagram of a sovereignty migration manner for a blockchain system according to an embodiment;
FIG. 7 is a second schematic diagram of a sovereignty migration manner for a blockchain system according to an embodiment;
FIG. 8 is a third schematic diagram of a sovereignty migration manner for a blockchain system according to an embodiment;
FIG. 9 is a flowchart of a method for implementing multi-layer network rollup according to an embodiment;
FIG. 10 is a schematic diagram of contract state storage of a smart contract according to an embodiment;
FIG. 11 is a flowchart of a sovereignty management method for a blockchain system according to an embodiment;
FIG. 12 is a flowchart of a management method for a blockchain system according to an embodiment; and
FIG. 13 is a structural block diagram of a blockchain node according to an embodiment.

### DETAILED DESCRIPTION OF THE EMBODIMENTS

To enable those skilled in the art to better understand the technical solutions in the present specification, the technical solutions in the embodiments of the present specification will be clearly and completely described below with reference to the accompanying drawings. Apparently, the described embodiments are merely some, rather than all, of the embodiments of the present specification. All other embodiments obtained by those of ordinary skill in the art based on the embodiments of the present specification without creative effort shall fall within the protection scope of the present specification.

The classical CAP theorem in distributed systems states that Consistency, Availability, and Partition tolerance cannot all be achieved simultaneously, which is referred to as the "impossibility trilemma." A similar impossibility trilemma also exists in blockchain systems: efficiency, decentralization, and security. Although this "impossibility trilemma" for blockchain systems has not yet been rigorously proven theoretically, it serves as a summary of existing blockchain systems. Efficiency, decentralization, and security are defined respectively as follows: Efficiency: the number of transactions processed per second, i.e., TPS (transactions per second); Decentralization: the barrier to entry for participating nodes is sufficiently low to ensure a large number of distributed nodes in the system; Security: the difficulty of launching an attack against the blockchain system is sufficiently high.

In response to the above-mentioned "impossibility trilemma" of blockchain systems, Ethereum (also referred to as "mainnet" or "Layer 1"; in addition, currently popular public chain projects such as Binance's BSC and TRON also fall within the category of Layer 1/mainnet) has chosen security and decentralization at the expense of efficiency, currently achieving only approximately 12 to 15 TPS. When there is a large volume of transactions to be processed, especially transactions involving complex operations, Layer 1 becomes congested. In addition to ordinary transfer transactions, Layer 1 also serves as the primary platform for popular applications such as decentralized finance (DeFi) and non-fungible tokens (NFTs). During periods of high transaction activity, congestion on Layer 1 becomes particularly severe, resulting in significant transaction latency.

High gas fees (or transaction fees) often become an obstacle to transactions. Although the consensus mechanism has transitioned from proof of work (PoW) to proof of stake (PoS), this change only alters the manner in which bookkeeping rights on the blockchain are acquired, while the transaction fees paid to nodes that obtain bookkeeping rights have not been significantly reduced. This is because gas fees are designed to cover the consumption incurred by nodes when executing transactions (including executing smart contract code), and gas fees will not decrease as long as this consumption remains unchanged. For example, the transaction fee for a currency exchange transaction on a decentralized exchange may exceed 100 U.S. dollars during congestion, which deters many users.

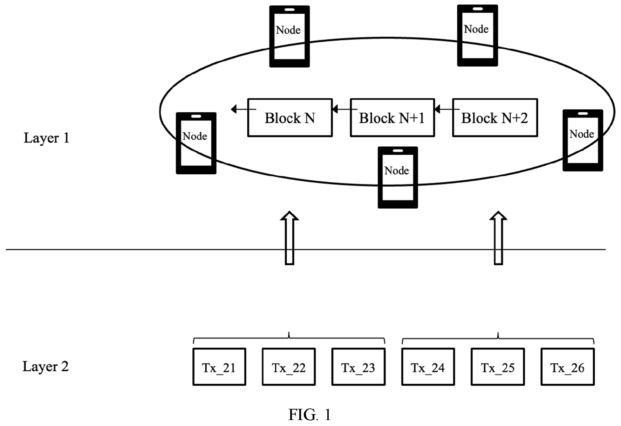

Layer 2 technology is a scalability solution built on top of Layer 1, aimed at addressing the problems of low efficiency and high transaction fees on Layer 1. As shown in FIG. 1, transactions can be executed rapidly on Layer 2, and Layer 2 synchronizes the final state back to Layer 1 at certain intervals. Layer 2 is dedicated to providing high-speed transaction processing, while security and decentralization are ensured by Layer 1. In this way, while alleviating the pressure on Layer 1, the gas fees for executing transactions on Layer 2 can be significantly reduced, and the gas fees required to synchronize the final state of transaction execution on Layer 2 (rather than all states on Layer 2) back to Layer 1 can also be significantly reduced. Architecting Layer 2 on top of Layer 1 effectively separates the execution process of transactions or contracts from the preservation of the final state: the execution process is placed on Layer 2, while Layer 1 only needs to preserve the final state. In this design, it is necessary to ensure the correctness of the execution process of transactions or contracts on Layer 2, and that the state written to Layer 1 is consistent with the results of correct execution on Layer 2.

Layer 2 of Ethereum includes a mechanism called Rollup.

The core idea of Rollup, as shown in FIG. 1, is to preserve, on Layer 1, evidence capable of verifying the transaction process, while running the transaction process (computation process) and state storage on Layer 2. The so-called evidence of the transaction process includes a set of pre-states before execution of a group of transactions, post-states after execution of the group of transactions, and the group of transactions itself. This evidence can be used to verify whether the state transition corresponding to the group of transactions is correct, and can also be used to reconstruct the execution process of all transactions and the states of all accounts on Layer 2, thereby eliminating security risks caused by data availability issues on Layer 2.

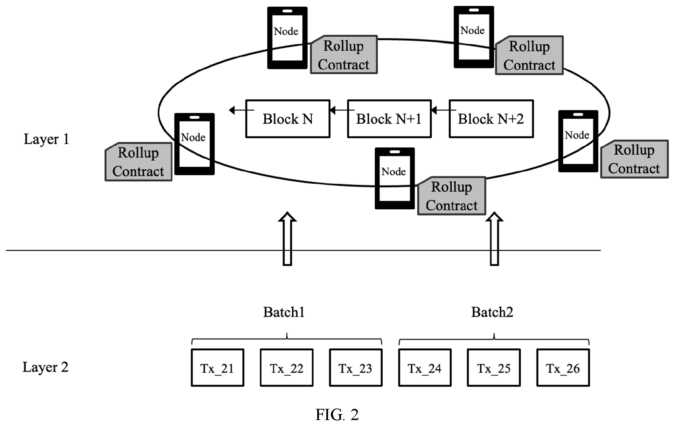

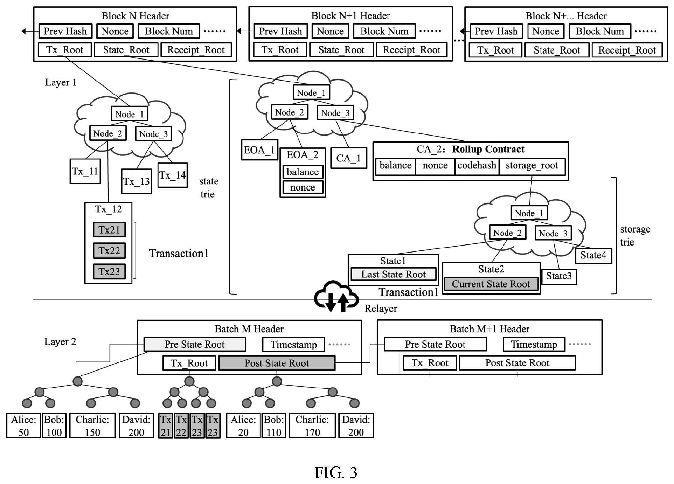

The principles of Rollup can be specifically illustrated in FIGS. 2 and 3 (FIG. 3 primarily illustrates OP-Rollup described below).

A transaction for creating a smart contract is sent to Layer 1. After consensus is reached on Layer 1, each node on Layer 1 can execute this transaction, thereby completing deployment of the contract. Specifically, this transaction may be executed by the Ethereum Virtual Machine (EVM) or WebAssembly (WASM) of a blockchain node. The EVM is a Turing-complete virtual machine, which means various complex logic can be implemented through it; this is one of the most significant improvements of Ethereum as a representative of Blockchain 2.0 over Blockchain 1.0. Users can publish and invoke smart contracts in Ethereum, and these operations can run on the EVM. After execution of the transaction deploying the smart contract, a contract account corresponding to the smart contract is generated on Layer 1. The contract account has an on-chain address and includes a balance, a nonce, a code hash of the contract code, and a storage root of contract storage. Through the code hash and the storage root, the code and account storage of the contract can be preserved in the contract account. The behavior of the smart contract is controlled by the contract code, while the account storage of the smart contract preserves the state of the contract. In other words, the smart contract causes a virtual account containing contract code and account storage to be generated on the blockchain. Subsequently, nodes on Layer 1 can receive transaction requests invoking the deployed smart contract. Such a transaction request may include the address of the invoked contract, the function in the invoked contract, and input parameters. Generally, after the transaction request undergoes consensus, each blockchain node can independently execute the specified invoked smart contract.

The storage root in Ethereum is a hash of a root node of an MPT tree, and this MPT tree organizes the storage of the state of contract accounts. MPT stands for Merkle Patricia Tree, which is a tree structure combining a Merkle tree and a Patricia tree (a compressed prefix trie, which is a more space-efficient trie). The Merkle tree algorithm computes a hash value for each transaction, then concatenates pairs of hash values and recomputes hashes iteratively up to the top-level Merkle root. Ethereum employs an improved MPT tree, for example, a 16-ary tree structure, commonly referred to simply as an MPT tree. In practice, the block header in Ethereum includes roots of three MPT trees, namely transaction root (abbreviated as Tx_Root), state root, and receipt root. The state root is the hash value of the root of an MPT tree composed of the states of all accounts in the current block; that is, what the state root points to is a state trie in MPT form. Partial values from each node along the path from the root node to a leaf node of this MPT can be concatenated in order to constitute an account address serving as a key, and the account information stored in the leaf node serves as the value corresponding to this account address, forming a key-value pair. The aforementioned key may be SHA-3(Address), i.e., the hash value of the account address (the hash algorithm may be, for example, the SHA-3 algorithm), and the stored value may be RLP(Account), i.e., the Recursive Length Prefix (RLP) encoding of the account information. The account information is a quadruple consisting of [nonce, balance, storageRoot, codeHash]. For an externally owned account (EOA), generally only the nonce and balance fields are present, while the storageRoot and codeHash fields store empty strings or all-zero strings by default. That is, an externally owned account does not store contract code, nor does it store state variables generated after contract execution. A contract account includes a nonce, a balance, a storage root, and a code hash. Whether it is an externally owned account or a contract account, its account information is generally located in a separate leaf node.

For a contract account (CA) in the state trie, its storage root points to another tree also in MPT form, which stores data of state variables involved in contract execution. The tree in MPT form pointed to by the storage root is a storage trie; that is, the storage root stores the hash value of the root node of the storage trie. Generally, this storage trie also stores key-value pairs. The key indicates the address of a state variable, and its value may be a result obtained by processing the declared position of the state variable in the contract (a value counted starting from 0) according to certain rules, for example, SHA-3(declared position of the state variable), or SHA-3(contract name + declared position of the state variable). The value is used to store the value of the state variable (for example, an RLP-encoded value). Partial data stored along the path from the root node to the leaf node is concatenated to form the key, and the value is stored in the leaf node. In the state trie and the storage trie therein, root nodes and intermediate nodes other than leaf nodes are represented by cloud shapes in FIG. 3 to illustrate their flexible and complex structures.

As shown in FIG. 2, a Rollup contract may be deployed on Layer 1 in the Rollup mechanism. On Layer 2, initiated transactions such as Tx_21 and Tx_22 shown in the figure can be received. A batch of transactions is referred to as a transaction batch (i.e., a batch), which is executed sequentially and updates the state as a whole. As shown in FIGS. 1 and 2, Batch 1 may hypothetically include three transactions: Tx_21, Tx_22, and Tx_23; Batch 2 may hypothetically include three transactions: Tx_24, Tx_25, and Tx_26. On Layer 2, these transactions can be sorted according to a rule, and the sorted transactions can then be executed sequentially, for example, sorted by timestamps in the transactions. After sequential execution of the transactions in a batch, multiple resulting states may be produced. For example, the transactions in Batch 1 are respectively:
Tx_21: Alice→Bob 20; indicating that Alice transfers 20 units of assets, such as Ether, to Bob;
Tx_22: Alice→Charlie 10; indicating that Alice transfers 10 units of assets, such as Ether, to Charlie;
Tx_23: Bob→Charlie 10; indicating that Bob transfers 10 units of assets, such as Ether, to Charlie.

Before execution of the transactions in Batch 1, assume there are four states in total, referred to herein as the initial state of Batch 1, i.e., the state values locked by the Pre State Root in FIG. 3, which are respectively:
Alice: 50, Bob: 100, Charlie: 150, David: 200.

After execution of the transactions in Batch 1, these four states are updated to the final state of Batch 1, i.e., the state values locked by the Post State Root in FIG. 3, which are respectively:
Alice: 20, Bob: 110, Charlie: 170, David: 200.

On Layer 2, a Merkle tree may be used to organize the states before and after sequential execution of the transactions in Batch 1. As shown in FIG. 3, on Layer 2, the transactions in a batch and their associated state changes can be organized together. For example, the hash values of the transactions in Batch 1 are organized into a Merkle tree, and the resulting Merkle root is locked in the header of the batch. This header is analogous to the block header in Layer 1, and this Merkle root is the Tx_Root in the header of the batch. Similarly, as described above, the Merkle root obtained by organizing all state values before execution of the transactions in Batch 1 into a Merkle tree can be locked in the header of the batch, i.e., the Pre State Root; and the Merkle root obtained by organizing the hashes of all state values after sequential execution of the transactions in Batch 1 into a Merkle tree can be locked in the header of the batch, i.e., the Post State Root. For Batch M, a timestamp may also be set in its header to record the time when the batch was generated, and other field information may of course also be set. For the (M+1)-th batch, the Pre State Root in its header is equal to the Post State Root in the header of the M-th batch, as indicated by the connecting line between these two roots in FIG. 3. In this way, a chain structure is formed among batches.

Rollup mechanisms for Layer 2 may include Optimistic Rollup (OP-Rollup), ZK-Rollup (zero-knowledge proof Rollup, where ZK refers to zero knowledge), TEE-Rollup mechanisms, and the like.

In the OP-Rollup mechanism, a transaction pool (TxPool), a relayer, and a sequencer may be provided in Layer 2. In ZK-Rollup and TEE-Rollup mechanisms, a prover may also be provided in Layer 2; for the TEE-Rollup mechanism in particular, the prover may be disposed in a trusted execution environment (TEE).

The OP-Rollup mechanism is exemplarily described below. As shown in FIG. 3, assume that transactions Tx21, Tx23, Tx25, Tx22, Tx26, and Tx24 are collected in the TxPool. The sequencer sorts these transactions according to their timestamps and packages them, for example, packaging Tx21, Tx22, and Tx23 into Batch M, organizing the hash values of these transactions into a Merkle tree to generate a Merkle root (i.e., transaction root), and filling the hash value of this Merkle root into the Tx_Root field in the header of the generated Batch M. It should be noted that when computing the root of a Merkle tree, generally for cases where the number of items is less than a power of two, 2ⁿ, the last transaction may be duplicated to pad the count to a power of two, 2ⁿ, so as to compute the root of a binary Merkle tree. As shown in FIG. 3, Tx23, which is last in chronological order, is duplicated once to pad the total to four transactions, i.e., reaching a power of two, 2², thereby enabling computation of the root of a binary Merkle tree. After sorting the transactions by their timestamps, the sequencer packages Tx21, Tx22, and Tx23 into Batch M+1.

Before execution of the transaction sequence Tx21, Tx22, Tx23 in Batch M, all states include, as described above: Alice: 50, Bob: 100, Charlie: 150, David: 200. The sequencer can organize these states into a Merkle tree and use the hash value of the root node of this Merkle tree as the pre-state root corresponding to Batch M, storing it in the Pre State Root field of the Batch M header. Subsequently, the sequencer can execute the three transactions Tx21, Tx22, and Tx23 sequentially; execution of these three transactions produces new states, as described above: Alice: 20, Bob: 110, Charlie: 170, David: 200. The sequencer can organize these updated states into a Merkle tree and use the hash value of the root node of this Merkle tree as the post-state root corresponding to Batch M, storing it in the Post State Root field of the Batch M header.

Subsequently, the sequencer can send, via the relayer, a transaction 1 invoking the Rollup contract to Layer 1. Transaction 1 contains some or all fields from the Batch M header, as well as the compressed transaction sequence Tx21, Tx22, Tx23. After compression, Tx21, Tx22, and Tx23 occupy significantly less space. The interface invoked in the Rollup contract may include storing the compressed transaction data (Tx21, Tx22, Tx23) in calldata, which is a lower-cost (lower gas fee) location. In Ethereum smart contracts, calldata is a special data location used to store input data passed through function calls. Specifically, calldata is generally stored directly in the transaction data of Ethereum and typically consumes less gas than other data locations (such as memory and storage). Although the process of compressing the transaction sequence included in a transaction batch is omitted herein, it can be understood that any transaction sequence included in any transaction batch described below may be either an uncompressed transaction sequence or a compressed transaction sequence.

It is worth noting that in an Ethereum transaction, the signature portion accounts for approximately half of the overall size, and its From field can be 0 bytes because the From field can be recovered from the signature. In contrast, in Rollup, BLS or other schemes are typically used for aggregation, compressing the signature of each transaction to approximately 0.5 bytes on average. Correspondingly, since the From field of a transaction cannot be recovered from such an aggregated signature in a Rollup transaction, 4 bytes need to be separately allocated here for representation.

The BLS signature scheme was originally proposed in 2001 by Stanford University professor Dan Boneh et al., and is constructed based on bilinear maps. Generally, a user's control over their own account is reflected by signing a transaction with their own private key. A single signature, as shown in the table above, may reach 68 bytes, occupying considerable space. For multiple transactions initiated by multiple accounts, each account needs to sign each of its own transactions separately. Signature aggregation, however, can aggregate multiple signatures into a single signature, thereby greatly saving byte space for signatures. Such aggregation may be aggregation of signatures on the same message by different signers, or aggregation of signatures on different messages. Public key aggregation can aggregate multiple different public keys into a single aggregate public key, and verification of the aggregated signature can be completed using this aggregate public key without requiring each individual public key to participate in computation during verification of the aggregate signature. Signature aggregation can typically be implemented using the Schnorr signature algorithm or the BLS signature algorithm. Compared with the Schnorr signature algorithm, the aggregated signature implemented by the BLS signature algorithm has a smaller size, approximately one-half that of Schnorr.

The above-described compression scheme and the use of BLS for signature aggregation represent ideal design schemes. Nevertheless, in several practical Rollup schemes, a single compressed transaction currently still occupies 40 to 50 bytes of space, and this does not yet include the signature; that is to say, BLS signature aggregation has not yet been adopted.

Continuing from the foregoing, after receiving transaction 1 invoking the Rollup contract, Layer 1 reaches consensus, executes transaction 1 on some nodes, and generates a block together with transaction 1 and its execution result along with other transactions and their execution results, as illustrated by Block N in FIG. 3. The other transactions may include ordinary transfer transactions and transactions involving other smart contracts. Both ordinary transfer transactions and transactions involving other smart contracts may involve transaction execution. In particular, transactions involving other smart contracts may involve relatively complex execution logic. Transaction 1 herein invokes a function in the Rollup contract that stores data into the calldata location, primarily involving storage into a specified location and not involving execution of complex contract logic. In other words, the primary role of the Rollup contract in Layer 1 is to store designated content from transactions sent from Layer 2 into designated locations, without involving complex execution logic. For example, as one example, Tx21, Tx22, and Tx23 are stored into Tx_12 in the transaction tree locked by the Tx_Root in the Block N header. Additionally, as one implementation, the Pre State Root and Post State Root in the Batch M header of transaction 1 may be stored via the Rollup contract into State 1 and State 2 in the contract state on Layer 1, respectively. As described above, State 1 and State 2 are contained in the state trie locked by the State _Root in the Block N header, specifically, for example, in the storage trie. For distinction purposes, State 1 and State 2 in the contract state on Layer 1 are referred to as Last State Root and Current State Root, respectively. Moreover, for simplification, only the Current State Root may be preserved in the contract state on Layer 1 without preserving the Last State Root, as shown in the code example below. In other implementations, the Last State Root and Current State Root may also be stored in calldata in Layer 1 in the same manner as transactions in Layer 2, which will not be elaborated further here. For the former case, for example, the following contract interface commitBatch() in Layer 1 is invoked: function CommitBatch(bytes[] calldata _transactions, bytes32 _preStateRoot, bytes32 _postStateRoot). Basic validation logic may be set inside the CommitBatch() contract interface, which may include, for example, verifying whether the Pre State Root in current transaction 1 is equal to the Current State Root in contract storage; if they are equal, the Layer 2 transactions passed in transaction 1 are stored into calldata, and the Current State Root in contract storage is updated to the Post State Root.

Through the above approach, OP-Rollup can execute individual transactions in Layer 2 and bundle tens, hundreds, or even more Layer 2 transactions in a single batch, publishing only minimal information to Layer 1. The so-called minimal information includes the compressed Layer 2 transactions and the hash values of the state roots before and after execution of this batch of transactions, as described above. As shown above, this can be accomplished, for example, by sending a single Layer 1 transaction, such as transaction 1 in FIG. 3. Thus, this is equivalent to executing a batch of transactions on Layer 2 at once while executing only a single transaction on Layer 1. At the same time, OP-Rollup does not attach any proof. This is based on the assumption that the submitted Layer 2 information contains no fraudulent or malicious behavior, hence the name "Optimistic." Despite this assumption, for prevention and deterrence, submitters of Layer 2 information are still required to stake a portion of Layer 1 assets (typically native on-chain tokens, such as Ether on Ethereum) in the Rollup contract of the OP-Rollup. For the Layer 2 information submitted to Layer 1, although the transactions therein are compressed, as described above, they can still be used to reconstruct the execution process of all transactions and the states of all accounts on Layer 2, thereby eliminating security risks caused by data availability issues on Layer 2.

Although OP-Rollup is optimistic, a challenge period can still be set on Layer 1, during which anyone may raise a challenge using a fraud proof. Typical grounds include a challenger proving that a certain transaction within the batch was not executed correctly, i.e., execution of that transaction did not produce the correct state. If a transaction within a batch is proven invalid, then that batch is also invalid, and the Rollup contract on Layer 1 can roll back the Layer 2 batch chain therein; the invalid batch and all subsequent batches become orphaned blocks. Once a fraud proof succeeds, a portion of the stake is paid to the challenger, and the remainder is burned. Conversely, if no fraud proof is submitted by the end of the challenge period, the Rollup contract can finalize the batch. Fraud proofs are a data validity verification method employed in Optimistic Rollup schemes. Currently, fraud proofs can be categorized into two types: single-round interactive and multi-round interactive.

In one implementation of single-round interactive fraud proofs, the disputed transaction is replayed on Layer 1, and submission occurs after detecting whether an invalid state exists. For example, Alice, as a validator, synchronizes the compressed OP-Rollup data to Layer 1 while staking a bond. If challenger Bob disputes this data, he must initiate a challenge within the window period (challenge period) and likewise stake a bond. The Rollup contract of the OP-Rollup will recompute the transactions in that block on Layer 1 to determine correctness. The losing party's stake is slashed, and the winning party receives a reward.

It should be noted here that although calldata on Layer 1 contains all compressed transactions from Layer 2, during fraud proof verification, the compressed transactions of Batch M in calldata are not directly extracted and executed. Instead, simulation execution is performed based on the original text of all transactions in Batch M submitted by the challenger. This is because the compressed transactions of Batch M in calldata are generally only used to reconstruct the execution process of all transactions and the states of all accounts on Layer 2, thereby eliminating security risks caused by data availability issues on Layer 2; moreover, the compressed transactions of Batch M in calldata, without signatures, have undetermined authenticity, whereas the transactions submitted by the challenger are complete transactions whose validity can be verified; furthermore, the initial state cannot be verified because contract storage contains only state roots rather than full states, unless all transactions are re-executed sequentially starting from Batch 0 until all states obtained after execution of Batch M-1 are derived, which is clearly uneconomical and inefficient.

The single-round interactive fraud proof described above increases the amount of data that must be published on-chain and requires re-execution of all transactions in Batch M on Layer 1, and replaying these transactions incurs substantial gas costs. Therefore, OP-Rollup is transitioning toward multi-round interactive proofs to achieve the same objective with higher efficiency.

In multi-round interactive fraud proofs, after Bob challenges the data synchronized by the sequencer, the sequencer bisects the disputed batch range into front and rear segments and returns them via, for example, a dispute() contract interface. Bob then further selects one of the bisected segments to continue challenging, and the sequencer again bisects the disputed range... This cycle continues until the disputed range is narrowed down to a specific transaction. Here, Bob sends the original text of the challenged transaction (including the signature of each transaction) and the global state prior to execution of that transaction, and the sequencer sends the Pre State Root (also referred to herein as a state commitment) prior to execution of the challenged transaction and the Post State Root after execution, for computation and determination by the Rollup contract on Layer 1. Specifically, for example, the Rollup contract verifies the global state prior to execution of the challenged transaction based on the Pre State Root prior to execution of the challenged transaction, executes the challenged transaction on the basis of that global state to generate the post-execution state, generates a Post State Root based on the global state after execution of the challenged transaction, and compares it with the Post State Root sent by the sequencer; if they differ, the challenge succeeds; otherwise, the challenge fails. In practical applications, Arbitrum does not use bisection but instead uses K-section, i.e., dividing N instructions into N/K groups each time to locate fraudulent instructions, which is more efficient.

Therefore, compared with single-round interactive proofs, multi-round interactive proofs can resolve disputes at lower cost. For example, the bisection protocol can reduce the amount of data published on-chain (without needing to publish state commitments for every transaction), and can more readily support complex smart contracts and handle more demanding disputes. However, as the number of interaction rounds increases, its dispute window period also becomes longer.

Overall, because the design of OP-Rollup requires placing all data related to state updates and verification on Layer 1, the scalability and throughput improvement of OP-Rollup are the most limited, and a waiting period of seven days or even longer is required. This means that withdrawing assets from OP-Rollup incurs latency, requiring waiting until the window period elapses.

ZK-Rollup differs from Optimistic Rollup in that ZK-Rollup uses zero-knowledge proof technology. ZK refers to the ability to prove something (a transaction or a state) to another party without disclosing necessary information. In ZK-Rollup, unlike OP-Rollup, Layer 2 additionally generates a proof (including a cryptographic proof) for a transaction batch (for example, using cryptographic proof algorithms such as zk-SNARK). The proof in this proof can demonstrate that the Post State Root is obtained by correctly executing the transaction sequence in the corresponding transaction batch sequentially on the basis of the Pre State Root. Verification of the proof alone suffices to confirm this, without needing to re-execute the transactions in the batch for verification.

The process of generating the proof may involve the sequencer packaging all transactions in a batch in Layer 2 (including sender, recipient, and amount), together with the Pre State Root and Post State Root before and after execution of the transactions in this batch, and information such as the proving key, and sending them to a prover on Layer 2. The prover converts this information into a special form called a witness (selecting a portion thereof as public input and another portion as private input). Subsequently, the prover uses a zero-knowledge proof computation circuit (a specific algorithm) disposed therein to verify the validity and correctness of the public input plus private input. If verification is correct, circuit execution succeeds; otherwise, circuit execution fails. In the case of successful circuit execution, the prover can output a proof, which serves to prove that the packaged data is valid and correct. Moreover, this proof is small in size, generally only tens of bytes. The above proof generation process is similar to a re-execution process and involves extensive circuit computations, making it more complex and therefore generally time-consuming. It should be noted that the private input cannot be reverse-derived from the proof itself; only a party possessing the verification key of the zk-SNARK can verify a proof encrypted with the corresponding creation key. The public input can be used to verify the validity and correctness of the packaged data but cannot be used to obtain the specific content of the packaged data.

Using zero-knowledge proofs, the prover can publish the relatively small proof to Layer 1 via the relayer, and the Rollup contract can rapidly verify it. The small size of the proof further reduces gas consumption on Layer 1. Moreover, in ZK-Rollup, this verification process is typically completed automatically by a smart contract, and unlike OP-Rollup, there is no need to set a window period, making asset withdrawal faster. This is one of the primary characteristic differences between OP-Rollup and ZK-Rollup.

In the specific verification process, first, the public input (which can be computed from transaction 1 submitted in Block N, for example, computed by automatic execution computation logic in the Rollup contract when transaction 1 is submitted to the Rollup contract on Layer 1), the proof, and the verification key (the verification key may be preserved by a governance contract on Layer 1 and provided to the Rollup contract) are input into verification logic in the smart contract (for example, including a zk-SNARK verification algorithm). The verification logic uses the verification algorithm to check whether the proof is valid. If the proof is valid, then the packaged data corresponding to the public input is deemed valid and correct. If verification succeeds, the verification algorithm outputs a confirmation message proving that the packaged data corresponding to the public input is valid and correct; otherwise, the verification algorithm outputs an error message indicating invalidity or incorrectness of the data.

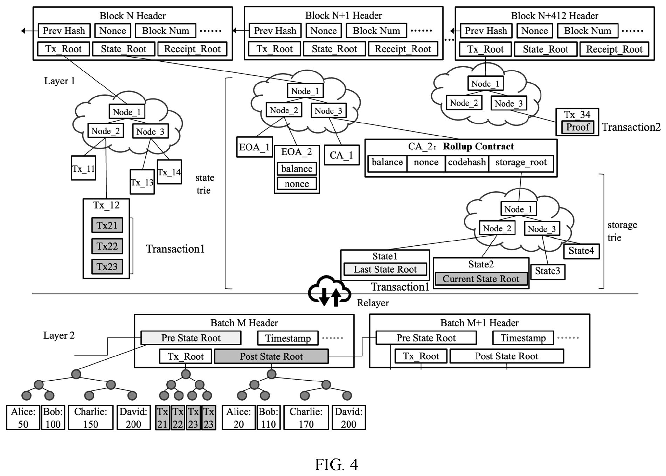

However, zero-knowledge proofs such as zk-SNARK require very large computational effort in the proof generation process, which also means that generating the proof is relatively time-consuming. Assume, as shown in FIG. 4, that compressed Tx21, Tx22, and Tx23 are stored in calldata in Layer 1 via transaction 1, and the Post State Root is stored as the Current State Root in the contract state on Layer 1. Transaction 1 is located in Block N of Layer 1 as shown in FIG. 4. Then the latency caused by the complex computational effort required to generate the corresponding proof in Layer 2 may result in the proof of Batch M being transmitted to Block N+412 on Layer 1 via transaction 2 after a period of time. From Block N to Block N+412, a certain latency is evidently introduced, and this latency may approach the order of hours.

To address the problems of computational complexity and long proof generation time, the TEE-Rollup mechanism was correspondingly proposed. The primary difference between the TEE-Rollup mechanism and ZK-Rollup lies in that the prover is implemented using a trusted execution environment (TEE), and after the sequencer-provided transaction root, pre-state root, and post-state root of a certain transaction batch pass verification, the prover signs relevant information of that transaction batch using a private key in the TEE, and then publishes the signature as a proof to Layer 1 via the relayer, which can be rapidly verified by the Rollup contract.

After the challenge period corresponding to any transaction batch submitted by Layer 2 ends, or in other words, after the proof corresponding to any transaction batch passes verification in the Rollup contract of Layer 2, that arbitrary batch and its corresponding contract invocation transaction (for example, the aforementioned transaction 1 for invoking the Commit Batch() contract interface in the Rollup contract) enter a finality state.

With the rise of Rollup technology, modular application chain (AppChain) designs centered on Rollup technology have become increasingly diverse. An AppChain refers to a blockchain system designed to achieve independent business objectives or applications, such as gaming or DeFi applications. An AppChain can operate based on a public chain or main chain, yet it has its own independent consensus mechanism, block generation, and transaction verification methods. In the development of decentralized applications (DApps), AppChains can solve the scalability problem of public chains and improve the speed and efficiency of transaction processing. At the same time, AppChains still inherit the advantages of public chains, including their security and decentralization characteristics. For example, Plasma in Ethereum and Zones in Cosmos are both examples of AppChains. They have the capability to operate independently and can interact with the main chain, leveraging the main chain to achieve security and decentralization. In an AppChain, block generation speed, transaction fees, smart contract functionality, and the like can be customized according to specific application requirements. This makes AppChains more flexible than public chains and better adapted to specific business needs.

Any AppChain can be registered in a blockchain system located at Layer 1, with itself located at Layer 2; the blockchain system at Layer 1 holds sovereignty over that AppChain, i.e., the blockchain system at Layer 1 is the upper-layer blockchain system corresponding to that AppChain. That AppChain can also be registered in a blockchain system located at Layer 2, with itself located at Layer 3; the corresponding blockchain system at Layer 2 holds sovereignty over that AppChain, i.e., the corresponding blockchain system at Layer 2 is the upper-layer blockchain system corresponding to that AppChain. Correspondingly, if any AppChain is located at Layer 2, it may hold sovereignty over another AppChain located at Layer 3, i.e., it may itself serve as the upper-layer blockchain system corresponding to a blockchain system located at Layer 3. It can be understood that a multi-layer rollup network including multiple AppChains may even continue to extend to Layer 4, Layer 5, or even more layers.

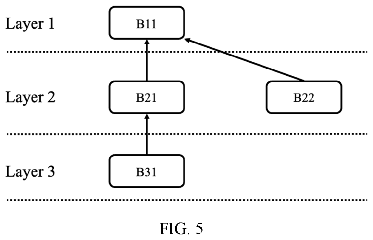

Exemplarily, referring to FIG. 5, a multi-layer rollup network employing Rollup technology may include a blockchain system B11 located at Layer 1, blockchain systems B21 and B22 located at Layer 2, and a blockchain system B31 located at Layer 3. Herein, B11 holds sovereignty over B21 and B22, i.e., B11 is the upper-layer blockchain system corresponding to B21 and B22; B21 holds sovereignty over B31, i.e., B21 is the upper-layer blockchain system corresponding to B31. Correspondingly, various Rollup mechanisms described above may be employed to implement rollup between B21 and B11, between B22 and B11, and between B31 and B21.

If a blockchain system located at Layer 2, Layer 3, or even a lower layer desires to perform sovereignty migration, i.e., a blockchain system may desire to replace its corresponding upper-layer blockchain system-for example, blockchain system B31 desires to replace its corresponding upper-layer blockchain system from B21 to B22-then offline communication among management members of blockchain systems B31, B21, and B22 is typically required, followed by corresponding data transmission to accomplish sovereignty migration. This approach is relatively inefficient and less secure.

To support blockchain systems located at Layer 2, Layer 3, or even lower layers in completing sovereignty migration efficiently and securely, a first rollup contract (hereinafter referred to as Rollup Contract C1) may be deployed in a first blockchain system located at Layer 1 (hereinafter referred to as blockchain system B11). Rollup Contract C1 provides a method function (hereinafter referred to as contract interface Identity register()) for supporting registration of any second blockchain system.

First, for any i-th second blockchain system among the N blockchain systems located at Layer 2, Layer 3, or even lower layers, for example, blockchain system B31. A management member of blockchain system B31 may send a registration transaction for invoking the contract interface Identity register() to blockchain system B11. Blockchain system B11 can execute Identity register() based on the registration transaction to store and activate registration information of blockchain system B31 in the contract state of Rollup Contract C1. The registration information of blockchain system B31 may come from the registration transaction and may include, but is not limited to, some or all of the following items of information of blockchain system B31: identification information, genesis block, set of management member addresses, set of sequencer addresses, consensus algorithm, storage manner of transaction batches, proof type/Rollup mechanism, and its corresponding verification algorithm.

Similarly, other second blockchain systems such as B21 and B22 can all be registered with blockchain system B11, so that registration information of each of the N second blockchain systems B21, B22, B31, etc., is stored and takes effect in the contract state of Rollup Contract C1.

Exemplarily, in the contract state of Rollup Contract C1, status indicators corresponding to the registration information of blockchain systems B21, B22, B31, etc., may be stored. The status indicator is used to indicate whether the corresponding registration information is effective. For example, if the value of the status indicator is a predetermined numerical value 1, it indicates that the corresponding registration information is in an effective state, and sovereignty over the blockchain system to which the registration information belongs remains in blockchain system B11; that is, it indicates that the upper-layer blockchain system corresponding to the blockchain system to which the registration information belongs is blockchain system B11. Correspondingly, if the value of the status indicator is a predetermined numerical value 0, it indicates that the corresponding registration information is in an invalid state, and sovereignty over the blockchain system to which the registration information belongs is no longer in blockchain system B11; that is, it indicates that the upper-layer blockchain system corresponding to the blockchain system to which the registration information belongs is no longer blockchain system B11.

When blockchain systems B21, B22, and B31 complete registration with blockchain system B11 located at Layer 1, B21, B22, and B31 are all located at Layer 2. That is, the registration information of B21, B22, and B31 stored in the contract state of Rollup Contract C1 is all in an effective state; for example, the values of the status indicators corresponding to the registration information of B21, B22, and B31 are all 1.

After any i-th second blockchain system, such as B31, completes registration with blockchain system B11 located at Layer 1, sovereignty migration may be performed in various manners such as Migration Form 1 through Migration Form 3 described below, according to requirements of its management members.

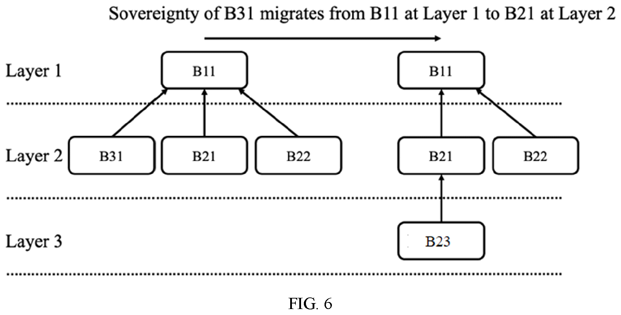

Migration Form 1: Sovereignty of blockchain system B31 migrates from a higher layer to a lower layer. For example, referring to FIG. 6, sovereignty of B31 may migrate from B11 located at Layer 1 to B21 located at Layer 2, with B31 itself entering Layer 3.

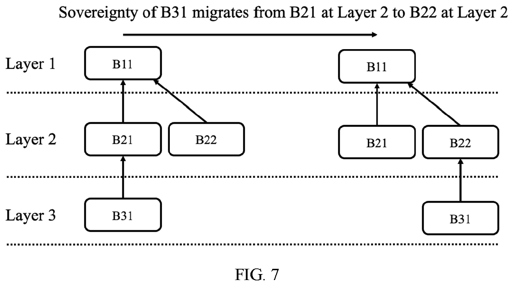

Migration Form 2: Sovereignty of blockchain system B31 may migrate within the same layer. For example, referring to FIG. 7, sovereignty of B31 may migrate from B21 located at Layer 2 to B22 located at Layer 2, with B31 itself remaining in Layer 3.

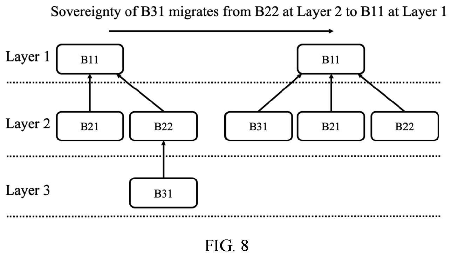

Migration Form 3: Sovereignty of blockchain system B31 migrates from a lower layer to a higher layer. For example, referring to FIG. 8, sovereignty of B31 may migrate from B22 located at Layer 2 to B11 located at Layer 1, with B31 itself entering Layer 2.

Similar to the solution in which blockchain system B11 holds or terminates its sovereignty over other second blockchain systems, if a blockchain system such as blockchain system B21 holds sovereignty over another blockchain system such as blockchain system B31, i.e., blockchain system B21 is the upper-layer blockchain system corresponding to blockchain system B31, then blockchain system B21 may deploy a rollup contract Rollup Contract C2 corresponding to blockchain system B31 based on the registration information of blockchain system B31. Sovereignty of blockchain system B21 over blockchain system B31 can be established or terminated by storing and activating the registration information of blockchain system B31 in the contract state of Rollup Contract C2, for example, by setting the value of the corresponding status indicator.

Based on the aforementioned Layer 1, Layer 2, and Layer 3, a method for implementing multi-layer network rollup is first introduced.

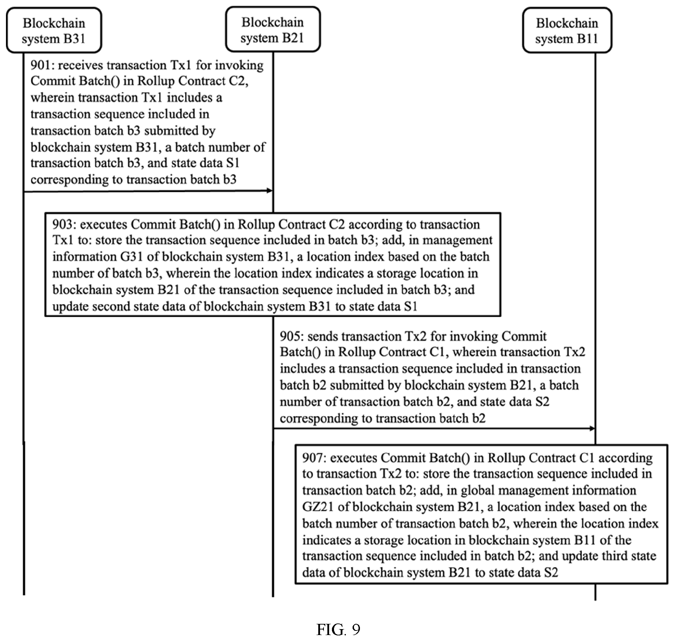

FIG. 9 illustrates a method for implementing multi-layer network rollup provided in an embodiment of the present specification. This method describes a process in which any i-th second blockchain system located at Layer 3 (for example, blockchain system B31), another second blockchain system located at Layer 2 (for example, blockchain system B21), and blockchain system B11 located at Layer 1 implement multi-layer network rollup; that is, the description is given taking B11 as the upper-layer blockchain system corresponding to B21 and B21 as the upper-layer blockchain system corresponding to B31.

In addition to including registration information of N second blockchain systems, the contract state of Rollup Contract C1 deployed in blockchain system B11 may further include global management information of the N second blockchain systems, for example, global management information stored using respective identification information of blockchain systems B21, B22, and B31 as keys. Herein, Rollup Contract C1 may include a contract interface Commit Batch() that can be invoked by a relayer or sequencer of blockchain system B21.

Blockchain system B21 located at Layer 2 may include Rollup Contract C2 set based on the registration information of blockchain system B31. Rollup Contract C2 may include, for example, a contract interface Commit Batch() that can be invoked by a relayer or sequencer of blockchain system B31. The contract state of Rollup Contract C2 may further include management information G31 stored using the identification information of blockchain system B31 as a key.

Referring to FIG. 9, the method may include, but is not limited to, some or all of Steps S901 to S907 below.

Step S901: Blockchain system B21 receives transaction Tx1 from blockchain system B31. Transaction Tx1 is for invoking Commit Batch() in Rollup Contract C2. Transaction Tx1 includes a transaction sequence included in transaction batch b3 submitted by blockchain system B31, a batch number of transaction batch b3, and state data S1 corresponding to transaction batch b3.

Since blockchain system B21 serves as the upper-layer blockchain system corresponding to blockchain system B31: blockchain system B21 corresponds to a third blockchain system corresponding to blockchain system B31; Rollup Contract C2 corresponds to a second rollup contract in the third blockchain system; Commit Batch() in Rollup Contract C2 corresponds to a fourth method function in the second rollup contract; transaction Tx1 corresponds to a fourth transaction for invoking the fourth method function; and transaction batch b3 corresponds to a second transaction batch.

The sequencer of blockchain system B31 may obtain, from the transaction pool (TxPool) of blockchain system B31, one or more user transactions initiated by respective externally owned accounts in blockchain system B31, and compose a transaction sequence belonging to a second transaction batch (for example, transaction batch b3). Subsequently, based on the world state of blockchain system B31 before execution of this transaction sequence, multiple user transactions in the transaction sequence are executed sequentially. Further, information such as the batch number, transaction root, pre-state root, and post-state root of transaction batch b3 can be correspondingly obtained, and the sequencer or relayer initiates transaction Tx1 to blockchain system B21.

State data S1 corresponding to transaction batch b3 may include: a state root corresponding to the world state of blockchain system B31 before execution of the transaction sequence included in transaction batch b3, i.e., the pre-state root corresponding to transaction batch b3; and a state root corresponding to the world state of blockchain system B31 after execution of the transaction sequence included in transaction batch b3, i.e., the post-state root corresponding to transaction batch b3. It should be noted that state data S1 may also include only the aforementioned post-state root.

Step S903: Blockchain system B21 executes Commit Batch() in Rollup Contract C2 based on transaction Tx1 to: store the transaction sequence included in batch b3; add a location index in management information G31 of blockchain system B31 according to the batch number of batch b3, wherein the location index is used to indicate a storage location of the transaction sequence included in batch b3 in blockchain system B21; and update second state data of blockchain system B31 to state data S1.

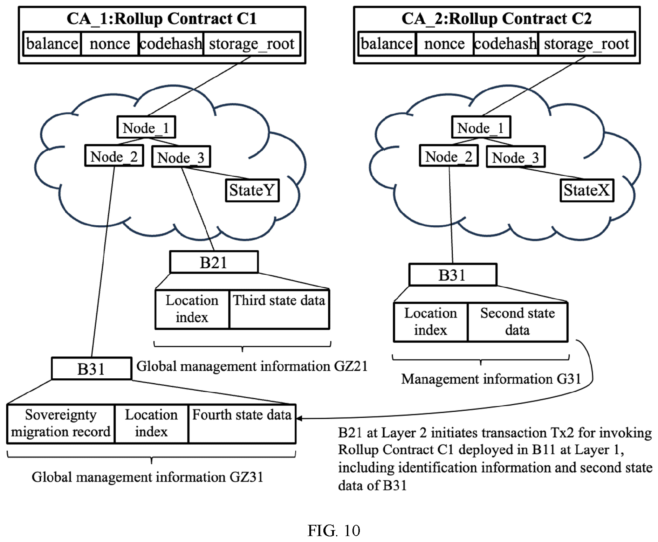

Referring to FIG. 10, a contract account (CA_2) corresponding to Rollup Contract C2 may include a nonce, a balance, a storage root, and a code hash. The storage root points to another tree also in Merkle Patricia Tree (MPT) form. This storage trie stores key-value pairs, and management information G31 of blockchain system B31 may be stored using the identification information of blockchain system B31 as a key. Management information G31 includes second state data of blockchain system B31 and one or more location indices. In the second state data, for example, the pre-state root and post-state root corresponding to batch b3 may be stored respectively through the two fields Last State Root and Current State Root as exemplified above. To enable independent storage of management information of different blockchain systems in the contract state of Rollup Contract C2, the second state data and all location indices included in management information G31 may be stored integrally as a value with the identification information of blockchain system B31 as the key.

In one possible implementation, the transaction sequence included in batch b3 may be stored directly in transaction Tx1, and the location index corresponding to batch b3 may include the batch number of batch b3, the block number of the block to which transaction Tx1 belongs in blockchain system B11, and the transaction index of transaction Tx1 within that block. In another possible implementation, the transaction sequence included in batch b3 may be stored in management information G31 of blockchain system B31, and the location index may include the batch number of batch b3 and position information of the transaction sequence included in batch b3 within management information G31.

Step S905: Blockchain system B21 sends transaction Tx2 to blockchain system B11. Transaction Tx2 is for invoking Commit Batch() in Rollup Contract C1. Transaction Tx2 includes a transaction sequence included in transaction batch b2 submitted by blockchain system B21, a batch number of transaction batch b2, and state data S2 corresponding to transaction batch b2.

Commit Batch() in Rollup Contract C1 is the third method function, and transaction Tx2 is the third transaction.

In some embodiments, transaction Tx2 may further include the identification information and second state data of blockchain system B31 stored via management information G31 in the contract state of Rollup Contract C2.

The contract interface Commit Batch() in Rollup Contract C1 is the third method function included in Rollup Contract C1. Transaction Tx2 is the third transaction for invoking the third method function. Transaction batch b2 is the first transaction batch. State data S2 corresponding to transaction batch b2 may include a pre-state root and a post-state root corresponding to the first transaction batch.

The sequencer of blockchain system B21 may first obtain, from the TxPool of blockchain system B21, multiple user transactions initiated by respective externally owned accounts in blockchain system B21, and compose a transaction sequence belonging to a first transaction batch (for example, transaction batch b2). Subsequently, based on the world state of blockchain system B21 before execution of this transaction sequence, multiple user transactions in the transaction sequence are executed sequentially. Further, information such as the batch number, transaction root, pre-state root, and post-state root of transaction batch b2 can be correspondingly obtained, and the sequencer or relayer initiates transaction Tx2 to blockchain system B21.

It should be particularly noted that transaction Tx2 includes the identification information and second state data of blockchain system B31 stored via management information G31 in the contract state of Rollup Contract C2 only when blockchain system B21 is the upper-layer blockchain system corresponding to blockchain system B31. When blockchain system B21 is not the upper-layer blockchain system corresponding to blockchain system B31, even if blockchain system B21 includes management information G31 of blockchain system B31, transaction Tx2 does not include the identification information and second state data of blockchain system B31 stored via management information G31.

In a typical example, the sequencer of blockchain system B21 may query Rollup Contract C2 to learn which blockchain systems have their registration information effective in blockchain system B21, i.e., to learn other blockchain systems (for example, blockchain system B31) that currently designate blockchain system B21 as their upper-layer blockchain system. Subsequently, in transaction Tx2 initiated by the sequencer of blockchain system B21 for invoking the contract interface Commit Batch() in Rollup Contract C1, the management information G31 of the aforementioned other blockchain systems (for example, blockchain system B31) can be queried from Rollup Contract C2, and the identification information and second state data of blockchain system B31 stored in management information G31 are added to transaction Tx2.

Step S907: Blockchain system B11 executes Commit Batch() in Rollup Contract C1 based on transaction Tx2 to: store the transaction sequence included in transaction batch b2; add a location index in global management information GZ21 of blockchain system B21 according to the batch number of transaction batch b2, wherein the location index is used to indicate a storage location of the transaction sequence included in batch b2 in blockchain system B11; and update third state data of blockchain system B21 to state data S2.

In the case where transaction Tx2 further includes the identification information and second state data of blockchain system B31, executing Commit Batch() in Rollup Contract C1 based on transaction Tx2 may further: update fourth state data of blockchain system B31 to the second state data in global management information GZ31 of blockchain system B31.

Referring to FIG. 10, a contract account (CA_1) corresponding to Rollup Contract C1 may include a nonce, a balance, a storage root, and a code hash. The storage root points to another tree also in MPT form. This storage trie stores key-value pairs, and global management information GZ21 of blockchain system B21 and global management information GZ31 of blockchain system B31 may be stored using the identification information of blockchain system B21 and blockchain system B31 as keys, respectively. Global management information GZ21 includes third state data of blockchain system B21 and one or more location indices. In the third state data, for example, the pre-state root and post-state root corresponding to batch b2 may be stored respectively through the two fields Last State Root and Current State Root as exemplified above. Similarly, in the fourth state data, for example, the second state data may be stored correspondingly through the two fields Last State Root and Current State Root as exemplified above. To enable independent storage of global management information of different blockchain systems in the contract state of Rollup Contract C1, all sovereignty migration records, all location indices, and thus the fourth state data included in global management information GZ31 may be stored integrally as a value with the identification information of blockchain system B31 as the key. Similarly, all location indices and thus the second state data included in global management information GZ21 may be stored integrally as a value with the identification information of blockchain system B31 as the key.

Based on a similar process, if the upper-layer blockchain system corresponding to blockchain system B31 during a certain time period includes blockchain system B11, then global management information GZ31 of blockchain system B31 will further include one or more location indices corresponding to some transaction batches submitted by blockchain system B31.

When any blockchain system uses a specified blockchain system as its corresponding upper-layer blockchain system during a certain time period, the specified blockchain system may maintain, through management information or global management information of that arbitrary blockchain system, location indices respectively corresponding to each transaction batch submitted by that arbitrary blockchain system during that time period. This can support, when that arbitrary blockchain system needs to perform data recovery due to certain reasons, querying, through the corresponding location indices, the storage locations in the specified blockchain system of the transaction sequences included in the transaction batches already submitted by that arbitrary blockchain system, and further utilizing the transaction sequences included in the already submitted transaction batches to recover that arbitrary blockchain system or partial data therein.

It should be understood that the method steps in the method embodiment shown in FIG. 9 described above merely describe a process of submitting transaction batches via provers or relayers in a multi-layer rollup network including Layer 1, Layer 2, and Layer 3. In practice, blockchain system B21 located at Layer 2 and blockchain system B31 located at Layer 3 may also submit proofs of relevant transaction batches to their respective upper-layer blockchain systems via their respective corresponding provers. After the proofs of the relevant transaction batches pass verification, the relevant transaction batches and their corresponding contract invocation transactions enter a finality state.

Based on the aforementioned Layer 1, Layer 2, and Layer 3, a sovereignty management method for a blockchain system is next introduced.

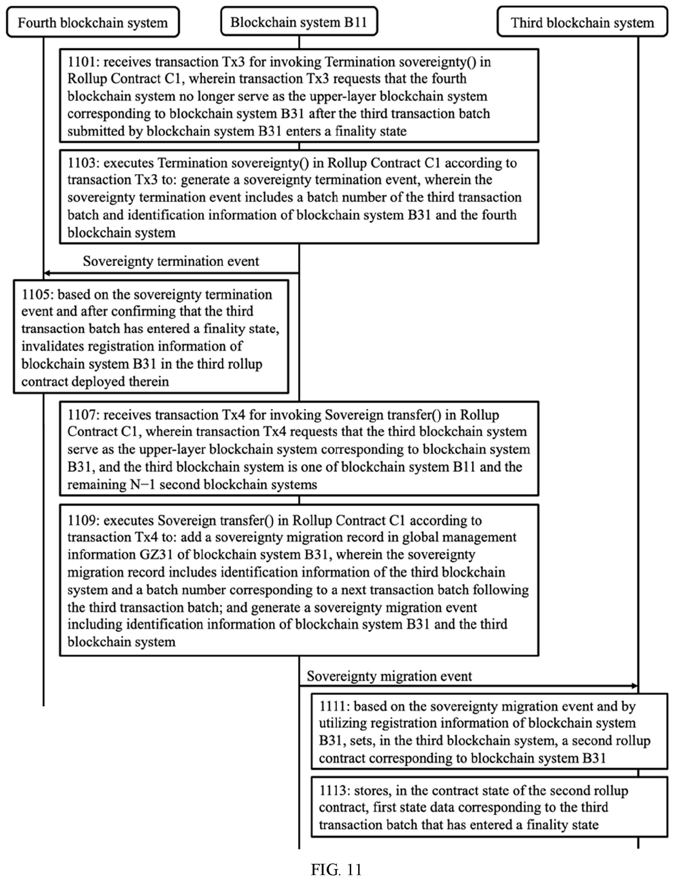

FIG. 11 is a flowchart of a sovereignty management method for a blockchain system provided in an embodiment of the present specification. This method involves blockchain system B11 and N second blockchain systems. The method exemplarily describes a process in which any i-th second blockchain system among the N second blockchain systems (denoted herein as blockchain system B31) performs sovereignty migration.

Referring to FIG. 11, the method may include, but is not limited to, some or all of Steps S1101 to S1113 below.

Optionally, Rollup Contract C1 deployed in blockchain system B11 includes a sixth method function, for example, represented by a contract interface Termination sovereignty(). If the current upper-layer blockchain system corresponding to blockchain system B31 is blockchain system B11 or a fourth blockchain system among the remaining N-1 second blockchain systems, and a management member of blockchain system B31 desires that the fourth blockchain system no longer serve as the upper-layer blockchain system corresponding to blockchain system B31 after a third transaction batch submitted by blockchain system B31 enters a finality state, then the management member of blockchain system B31 may initiate a sixth transaction (denoted as transaction Tx3) to blockchain system B11.

Correspondingly, blockchain system B11 may execute Step S1101: receiving transaction Tx3, wherein transaction Tx3 is for invoking Termination sovereignty() in Rollup Contract C1, and transaction Tx3 requests that the fourth blockchain system no longer serve as the upper-layer blockchain system corresponding to blockchain system B31 after the third transaction batch submitted by blockchain system B31 enters a finality state.

The following description primarily takes the case where the N second blockchain systems include blockchain systems B21, B22, and B31 as an example for exemplary illustration. On this basis, the aforementioned fourth blockchain system may be blockchain system B11, B21, or B22.

Transaction Tx3 may include, for example, the batch number of the third transaction batch submitted by blockchain system B31, as well as respective identification information of blockchain system B31 and the fourth blockchain system.

Step S1103: Blockchain system B11 executes Termination sovereignty() in Rollup Contract C1 based on transaction Tx3 to: generate a sovereignty termination event, wherein the sovereignty termination event includes the batch number of the third transaction batch and identification information of blockchain system B31 and the fourth blockchain system.

The result or relevant information of blockchain system B11 executing Termination sovereignty() based on transaction Tx3 may be recorded in a receipt corresponding to transaction Tx3. Specifically, the contract execution result or relevant information may be embodied as an event in the receipt. The event typically includes a topic field and a data field, wherein the topic field is used to record the subject of the event, and the data field is used to record corresponding information. The format of the event may be specified in the contract. Through a built-in Software Development Kit (SDK), a client or blockchain node can listen for events of a specific topic, pull content from the corresponding data upon detecting an event of the specific topic, and execute preset processing upon detecting a specific topic or certain content in the corresponding data.

Through this event mechanism, blockchain system B11 can place the execution result into an event corresponding to a certain topic, so that the fourth blockchain system can listen for that topic via a blockchain client built into its own sequencer or relayer, obtain the corresponding sovereignty termination event, and learn through the sovereignty termination event that it needs to cease serving as the upper-layer blockchain system corresponding to blockchain system B31 after the first transaction batch submitted by blockchain system B31 enters a finality state.

Correspondingly, in Step S1105, the fourth blockchain system invalidates the registration information of blockchain system B31 in a third rollup contract deployed therein, based on the sovereignty termination event and after confirming that the third transaction batch has entered a finality state.

For example, when the fourth blockchain system is blockchain system B11, the third rollup contract may be Rollup Contract C1. Since blockchain system B11 currently still holds sovereignty over blockchain system B31, blockchain system B11 itself or a management member of B11 can perceive whether the third transaction batch has entered a finality state based on the batch number of the third transaction batch. After the third transaction batch has entered a finality state, relevant infrastructure in blockchain system B11 may automatically initiate, or a management member of blockchain system B11 may actively initiate, a target transaction for invoking a specific method function in Rollup Contract C1, such as the contract interface Indicate change(). Blockchain system B11 executes the contract interface Indicate change() based on the target transaction to terminate sovereignty of blockchain system B11 over blockchain system B31, for example, by setting the status indicator corresponding to the registration information of blockchain system B31 from 1 to 0 in the contract state of Rollup Contract C1.

The foregoing exemplary description takes the case where the fourth blockchain system is blockchain system B11 as an example. However, it can be understood that when other blockchain systems such as blockchain system B21 or B22 serve as the fourth blockchain system, they may initiate a target transaction for invoking their own deployed third rollup contract through a similar strategy, thereby terminating sovereignty over B31 through a similar method.

When executing the target transaction, the fourth blockchain system not only terminates its sovereignty over blockchain system B31 but also correspondingly generates a sovereignty response event. The sovereignty response event may include, for example, a corresponding topic and identification information of blockchain system B31, thereby enabling blockchain system B31 and its management members to learn that the first transaction batch has entered a finality state.

Blockchain system B31 may also learn that the third transaction batch has entered a finality state through other means. For example, when the fourth blockchain system is blockchain system B11, after a prover of blockchain system B31 submits a proof corresponding to the third transaction batch to blockchain system B11 via a relevant transaction and the proof passes verification, blockchain system B11 may generate a corresponding proof notification event for that relevant transaction, thereby enabling blockchain system B31 and its management members to learn, through the proof notification event corresponding to that relevant transaction, that the third transaction batch has entered a finality state.

When a management member of blockchain system B31 perceives that the third transaction batch has entered a finality state and desires to migrate sovereignty of blockchain system B31 to a third blockchain system, a fifth transaction (denoted as transaction Tx4) may be correspondingly initiated.

Correspondingly, blockchain system B11 may subsequently execute Step S1107: receiving transaction Tx4 for invoking Sovereign transfer() in Rollup Contract C1, wherein transaction Tx4 requests that the third blockchain system serve as the upper-layer blockchain system corresponding to blockchain system B31, and the third blockchain system belongs to blockchain system B11 or the remaining N-1 second blockchain systems.

It can be understood that Sovereign transfer() represents the fifth method function included in Rollup Contract C1.

Transaction Tx4 may include, for example, identification information of the third blockchain system, and may further include the batch number of the third transaction batch or a batch number corresponding to a next transaction batch following the third transaction batch; wherein the batch number corresponding to the next transaction batch following the third transaction batch is the first batch number corresponding to the first transaction batch submitted during the period when blockchain system B31 uses the third blockchain system as its corresponding upper-layer blockchain system. In addition, transaction Tx4 may also include identification information of blockchain system B31 and identification information of the fourth blockchain system, etc.

Step S1109: Blockchain system B11 executes Sovereign transfer() in Rollup Contract C1 based on transaction Tx4 to: add a sovereignty migration record in global management information GZ31 of blockchain system B31, wherein the sovereignty migration record includes identification information of the third blockchain system and the batch number corresponding to the next transaction batch following the third transaction batch; and generate a sovereignty migration event, which includes identification information of blockchain system B31 and the third blockchain system.

The batch number corresponding to the next transaction batch following the third transaction batch is the first batch number corresponding to the first transaction batch submitted during the period when blockchain system B31 uses the third blockchain system as its corresponding upper-layer blockchain system.

In combination with the foregoing example where the N second blockchain systems include blockchain systems B21, B22, and B31, the aforementioned fourth blockchain system may be blockchain system B11, B21, or B22. Accordingly, the aforementioned third blockchain system may be blockchain system B11, B21, or B22, wherein the third blockchain system is different from the fourth blockchain system.

The sovereignty migration event may further include registration information of blockchain system B31.

Step S1111: The third blockchain system sets, based on the sovereignty migration event and by utilizing registration information of blockchain system B31, a second rollup contract corresponding to blockchain system B31 in the third blockchain system.

The third blockchain system may obtain the sovereignty migration event through the aforementioned event listening mechanism; that is, the sequencer or relayer and management members of the third blockchain system may perceive the sovereignty migration event. When no rollup contract is deployed in the third blockchain system, the sequencer or relayer of the third blockchain system may automatically initiate a contract deployment transaction, or a management member of the third blockchain system may initiate a contract deployment transaction. The third blockchain system can complete deployment of the second rollup contract by executing the contract deployment transaction, and invoke a contract interface of the second rollup contract, such as Identity register(), through a corresponding interface invocation transaction. Through execution of the interface invocation transaction, the registration information of blockchain system B31 is stored and activated in the contract state of the second rollup contract, thereby making the third blockchain system the upper-layer blockchain system corresponding to blockchain system B31. It can be understood that when the second rollup contract is already deployed in the third blockchain system, the sequencer or relayer of the third blockchain system may automatically initiate the aforementioned interface invocation transaction, or a management member of the third blockchain system may initiate the interface invocation transaction. The third blockchain system can complete storing and activating the registration information of blockchain system B31 in the contract state of the second rollup contract by executing the interface invocation transaction, thereby becoming the upper-layer blockchain system corresponding to blockchain system B31.

The third blockchain system may obtain the registration information of blockchain system B31 from the sovereignty migration event, or may obtain the registration information of blockchain system B31 from Rollup Contract C1 through other means, so that in subsequent processes, the second rollup contract in the third blockchain system can process contract invocation transactions initiated by the sequencer or relayer and/or prover or relayer of blockchain system B31 for invoking the second rollup contract according to the registration information of blockchain system B31.

Step S1113: The third blockchain system stores, in the contract state of the second rollup contract, first state data corresponding to the third transaction batch that has entered a finality state.

Referring to the relevant content described in the embodiment shown in FIG. 9 above, after blockchain system B31 submits transaction batch b3, state data S1 corresponding to transaction batch b3 is stored as second state data in smart contract Rollup Contract C2 deployed by the upper-layer blockchain system B21. This second state data is further transmitted to blockchain system B21 via transaction Tx2 initiated by blockchain system B21 to blockchain system B11, and is stored as fourth state data in blockchain system B21.

Correspondingly, after the third transaction batch has entered a finality state, the fourth state data of blockchain system B31 stored in blockchain system B21 is exactly the first state data corresponding to the third transaction batch. Therefore, the sovereignty migration event may further include the fourth state data of blockchain system B31, that is, include the first state data.

The third blockchain system may also obtain the first state data corresponding to the third transaction batch through other means. Exemplarily, the third blockchain system may obtain a genesis block from the registration information of blockchain system B31, and obtain transaction sequences and proofs included in all transaction batches submitted by blockchain system B31 that have entered a finality state from each blockchain system that once served as the upper-layer blockchain system corresponding to blockchain system B31. By replaying the genesis block and the transaction sequences included in all transaction batches, the first state data corresponding to the third transaction batch is obtained. Alternatively, the first state data corresponding to the third transaction batch may be obtained from the fourth blockchain system through decentralized infrastructure such as a relayer.

The method embodiment shown in FIG. 11 described above exemplarily illustrates a process in which blockchain system B31 performs one sovereignty migration. However, it can be understood that blockchain system B31 may perform multiple sovereignty migrations.

Management members of blockchain system B31 may also desire to reuse infrastructure of the upper-layer blockchain system corresponding to blockchain system B31, such as one or more items among various infrastructure components including sequencers, provers, and relayers. Correspondingly, in some embodiments, Rollup Contract C1 may further include a method function such as Facility management(). On this basis, a management member of blockchain system B31 may initiate a specific transaction (denoted as transaction Tx5) to blockchain system B11 for invoking Facility management(), wherein transaction Tx5 requests that blockchain system B31 reuse infrastructure in the third blockchain system for executing predetermined tasks. For example, transaction Tx5 may include identification information of blockchain system B31, identification information of the third blockchain system, and indication information, wherein the indication information is used to indicate the infrastructure to be reused. Subsequently, blockchain system B11 may execute Facility management() in Rollup Contract C1 based on transaction Tx5 to: generate a facility reuse event, which includes identification information of blockchain system B31 and the third blockchain system, and may further include the aforementioned indication information. Sequencers, provers, relayers, etc. in the third blockchain system may obtain the aforementioned facility reuse event through the event listening mechanism, and further, the infrastructure included in the third blockchain system itself and indicated by the corresponding indication information can be correspondingly used to execute predetermined tasks required to be executed in blockchain system B31. Exemplarily, for example, a sequencer or prover in the third blockchain system may execute some tasks that need to be executed in blockchain system B31.

Although the method embodiments shown in FIGS. 9 and 11 described above exemplarily illustrate how to maintain sovereignty migration records of blockchain system B31 in blockchain system B11, maintain location indices corresponding to transaction sequences included in transaction batches submitted by blockchain system B21 in blockchain system B11, and maintain location indices corresponding to transaction sequences included in transaction batches submitted by blockchain system B31 in blockchain system B21, it can be understood that maintenance of sovereignty migration records and location indices corresponding to each second blockchain system may also be implemented through other means.

Exemplarily, when blockchain system B21 uses a certain third blockchain system as its corresponding upper-layer blockchain system, a management member of blockchain system B31 may register blockchain system B31 directly with the third blockchain system without involvement of blockchain system B11, and then the management member of blockchain system B31 may initiate a contract invocation transaction targeting Rollup Contract C1, ultimately adding a corresponding sovereignty migration record to the global management information of blockchain system B31. Similarly, transaction Tx2 may further include transaction sequences, batch numbers, and state data respectively corresponding to one or more transaction batches submitted by blockchain system B31 other than transaction batch b2.

Any i-th second blockchain system, such as blockchain system B31, may experience loss or corruption of world state data due to cessation of maintenance by management members or other failures. In such cases, users in blockchain system B31 or management members of blockchain system B31 may desire to obtain transaction sequences included in some or all transaction batches already submitted by blockchain system B31, so as to recover the world state data of blockchain system B31 through transaction replay.

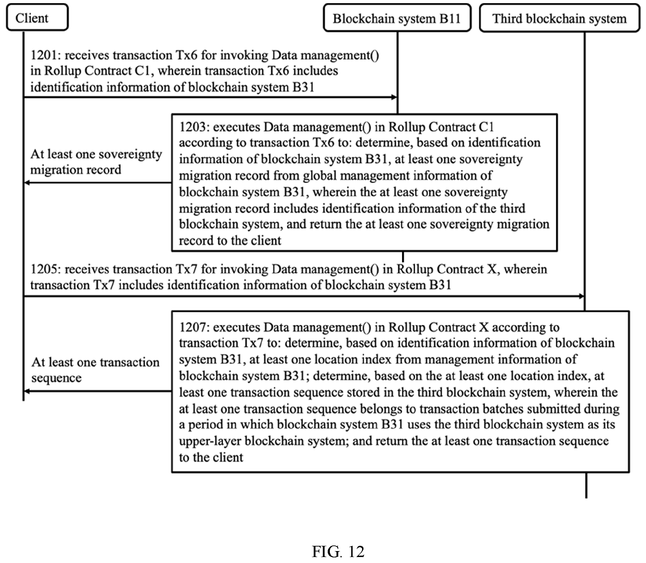

FIG. 12 is a flowchart of a management method for a blockchain system provided in an embodiment of the present specification. This method involves blockchain system B11 located at Layer 1 and N second blockchain systems located at Layer 2, Layer 3, or even lower layers. Rollup Contract C1 deployed in blockchain system B11 includes a first method function, hereinafter represented by a contract interface Data management(); wherein the contract state of Rollup Contract C1 includes global management information of the N second blockchain systems, for example, storing their global management information using identification information of the N second blockchain systems as keys.

As described above, the global management information of any i-th second blockchain system may include one or more sovereignty migration records corresponding to that i-th second blockchain system, and may also include one or more location indices corresponding thereto.

Referring to FIG. 12, the method may include, but is not limited to, some or all of Steps S1201 to S1207 below.

When a management member of any i-th second blockchain system (for example, blockchain system B31) desires to obtain transaction sequences included in some or all transaction batches already submitted by blockchain system B31 to recover world state data of blockchain system B31, a user in blockchain system B31 or a management member of blockchain system B31 may initiate, through a corresponding client, a first transaction (denoted as transaction Tx6) for invoking the contract interface Data management() in Rollup Contract C1.

Correspondingly, blockchain system B11 may execute Step S1201: receiving transaction Tx6 from the client, wherein transaction Tx6 is for invoking Data management() in Rollup Contract C1 and includes identification information of blockchain system B31.

In the case where a user or management member of blockchain system B31 possesses world state data corresponding to a certain target transaction batch already submitted by blockchain system B31, transaction batches submitted after the target transaction batch are the plurality of transaction batches to be recovered; the batch number corresponding to the next transaction batch following the target transaction batch is the starting batch number corresponding to the plurality of transaction batches to be recovered, and transaction Tx6 may include the starting batch number.

In the case where no world state data corresponding to any target transaction batch already submitted by blockchain system B31 is possessed, all transaction batches submitted by blockchain system B31 are transaction batches to be recovered, and the genesis block needs to be used at this time.

Step S1203: Blockchain system B11 executes Data management() in Rollup Contract C1 based on transaction Tx6 to: determine, based on the identification information of blockchain system B31, at least one sovereignty migration record from global management information of blockchain system B31, wherein the at least one sovereignty migration record includes identification information of a third blockchain system, and return the at least one sovereignty migration record to the client.

As described above, when blockchain system B31 makes a certain third blockchain system become its corresponding upper-layer blockchain system through sovereignty migration, a sovereignty migration record is added to the global management information of blockchain system B31, and this sovereignty migration record at least includes identification information of that third blockchain system; in addition, this sovereignty migration record may also include a first batch number corresponding to the first transaction batch submitted during the period when blockchain system B31 uses that third blockchain system as its corresponding upper-layer blockchain system. Therefore, after blockchain system B31 undergoes one or more sovereignty migrations, the global management information of blockchain system B31 may correspondingly include one or more sovereignty migration records.

If transaction Tx6 includes the starting batch number corresponding to the plurality of transaction batches to be recovered, when executing Data management() in Rollup Contract C1 based on transaction Tx6, since subsequent processes do not need to use transaction sequences included in transaction batches whose batch numbers are less than the starting batch number to recover world state data, for each sovereignty migration record included in the global management information of blockchain system B31, if the first batch number in that sovereignty migration record is not less than the starting batch number, it is returned to the client; otherwise, there is no need to return that sovereignty migration record to the client.

If transaction Tx6 does not include the starting batch number, when blockchain system B11 executes Data management() in Rollup Contract C1 based on transaction Tx6, it may also return the genesis block of blockchain system B31 to the corresponding client.

A user or management member of blockchain system B31 can learn, through the identification information of the third blockchain system included in each of the at least one sovereignty migration record received by the corresponding client, which blockchain systems store the transaction batches to be recovered, and can then initiate a second transaction (denoted as transaction Tx7) to each third blockchain system through the client.

In combination with the method embodiments shown in FIGS. 9 and 11 described above, it can be understood that a second rollup contract corresponding to blockchain system B31 (hereinafter the second method function is denoted as Rollup Contract X) may be set in the third blockchain system. Rollup Contract X may include, for example, a second method function that can be invoked by a client, such as a contract interface Data management(), and the contract state of Rollup Contract X stores management information or global management information of blockchain system B31; moreover, the third blockchain system may be blockchain system B11 or one of the remaining N-1 second blockchain systems. It is then readily understood that when the third blockchain system includes blockchain system B11, the second rollup contract may be Rollup Contract C1; when the third blockchain system includes blockchain system B21, the second rollup contract may be Rollup Contract C2.

Step S1205: The third blockchain system receives transaction Tx7 from the client, wherein transaction Tx7 is for invoking Data management() in Rollup Contract X, and transaction Tx7 includes identification information of blockchain system B31.

In the case where transaction Tx6 includes the starting batch number, transaction Tx7 also includes that starting batch number.

Step S1207: The third blockchain system executes Data management() in Rollup Contract X based on transaction Tx7 to: determine, based on the identification information of blockchain system B31, at least one location index from management information of blockchain system B31; determine, based on the at least one location index, at least one transaction sequence stored in the third blockchain system, wherein the at least one transaction sequence belongs to a transaction batch submitted during the period when blockchain system B31 uses the third blockchain system as its corresponding upper-layer blockchain system; and return the at least one transaction sequence to the client.

The location index is used to indicate a storage location of the transaction sequence included in the relevant transaction batch in blockchain system B21.

Referring to the relevant description of location indices above, any single location index determined from the management information of blockchain system B31 may include a batch number, a block number, and a transaction index. Correspondingly, for a single location index among the aforementioned at least one location index, a corresponding target block can be determined from the third blockchain system based on the block number and transaction index therein, and a corresponding target transaction can be determined from that target block based on the transaction index therein, and then a corresponding transaction sequence can be obtained from that target transaction, wherein the transaction sequence belongs to the transaction batch corresponding to the batch number included in that location index.

Referring to the relevant description of location indices above, any single location index determined from the management information of blockchain system B31 may include a batch number and a storage location of a transaction sequence in the management information of blockchain system B31. Correspondingly, for a single location index among the aforementioned at least one location index, a corresponding transaction sequence can be determined from the management information of blockchain system B31 based on position information included in that location index.

If transaction Tx7 includes the starting batch number corresponding to the plurality of transaction batches to be recovered, when executing Data management() in Rollup Contract X based on transaction Tx7, since subsequent processes do not need to use transaction sequences included in transaction batches whose batch numbers are less than the starting batch number to recover world state data, for each location index included in the management information of blockchain system B31, if the batch number in that location index is not less than the starting batch number, the corresponding transaction sequence is queried in the third blockchain system based on that location index and returned to the client; otherwise, there is no need to query the corresponding transaction sequence in the third blockchain system based on that location index.

If transaction Tx7 does not include the starting batch number corresponding to the plurality of transaction batches to be recovered, then the aforementioned at least one location index may be all location indices included in the management information of blockchain system B31.

When the third blockchain system includes blockchain system B11, Rollup Contract X may be Rollup Contract C1 in blockchain system B11, and the management information of blockchain system B31 stored in the contract state of Rollup Contract X may specifically be the global management information of blockchain system B31 stored in the contract state of Rollup Contract C1.

Since blockchain system B31 may undergo multiple sovereignty migrations resulting in multiple sovereignty migration records, a single sovereignty migration record includes not only identification information of a certain third blockchain system but also a first batch number corresponding to the first transaction batch submitted after blockchain system B31 uses that third blockchain system as its corresponding upper-layer blockchain system. Thus, each sovereignty migration record can independently serve as a checkpoint, supporting users or management members of blockchain system B31 in more rapidly locating, from among a large number of transaction batches already submitted, the plurality of transaction batches used for recovering world state data.

After obtaining the at least one transaction sequence, a user or management member of blockchain system B31 can re-execute the at least one transaction sequence based on the genesis block of blockchain system B31 or world state data corresponding to a certain target transaction batch already submitted by blockchain system B31, together with the at least one transaction sequence, thereby recovering at least one transaction batch already submitted by blockchain system B31 that corresponds to the at least one transaction sequence, and obtaining corresponding world state data.

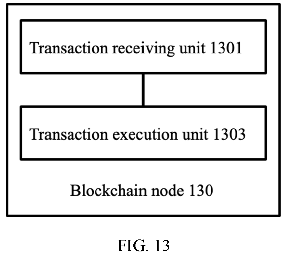

Based on the same inventive concept as the foregoing method embodiments, an embodiment of the present specification further provides a blockchain node 130 in a first blockchain system. A first rollup contract is deployed in the first blockchain system, the first rollup contract includes a first method function, and the contract state of the first rollup contract stores global management information of N second blockchain systems. Referring to FIG. 13, the blockchain node 130 includes: a transaction receiving unit 131 configured to receive, from a client, a first transaction for invoking the first method function, wherein the first transaction includes identification information of an i-th second blockchain system; and a transaction execution unit 133 configured to execute the first method function based on the first transaction to: determine, based on the identification information of the i-th second blockchain system, at least one sovereignty migration record from global management information of the i-th second blockchain system, wherein the at least one sovereignty migration record includes identification information of a third blockchain system, and return the at least one sovereignty migration record to the client, thereby causing the client to obtain, based on the at least one sovereignty migration record, at least one transaction sequence from the third blockchain system, wherein the at least one transaction sequence belongs to a transaction batch submitted during a period when the i-th second blockchain system uses the third blockchain system as its corresponding upper-layer blockchain system.

An embodiment of the present specification further provides a non-transitory computer-readable storage medium on which a computer program or instructions are stored. When the computer program or instructions are executed in a computer, the computer is caused to execute the method steps performed by blockchain system B11, blockchain system B21, blockchain system B31, or the third or fourth blockchain system in the foregoing embodiments.

An embodiment of the present specification further provides a computing device including a memory and a processor. The memory stores a computer program or instructions, and when the processor executes the computer program or instructions, the method steps performed by blockchain system B11, blockchain system B21, blockchain system B31, or the third or fourth blockchain system in the foregoing embodiments are implemented.

In the 1990s, improvements to a technology could be clearly distinguished as either hardware improvements (for example, improvements to circuit structures such as diodes, transistors, switches, etc.) or software improvements (improvements to method flows). However, with the development of technology, many current improvements to method flows can now be regarded as direct improvements to hardware circuit structures. Designers almost invariably obtain corresponding hardware circuit structures by programming improved method flows into hardware circuits. Therefore, it cannot be said that an improvement to a method flow cannot be implemented using hardware entity modules. For example, a Programmable Logic Device (PLD), such as a Field Programmable Gate Array (FPGA), is precisely such an integrated circuit whose logic functions are determined by user programming of the device. Designers program a digital system themselves to "integrate" it onto a single PLD, without requiring chip manufacturers to design and fabricate custom integrated circuit chips. Moreover, nowadays, instead of manually fabricating integrated circuit chips, such programming is mostly accomplished using "logic compiler" software, which is similar to software compilers used in program development. The original code to be compiled must also be written in a specific programming language, referred to as a Hardware Description Language (HDL). There is not just one HDL but many, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, RHDL (Ruby Hardware Description Language), and the like. Currently, the most widely used are VHDL (Very-High-Speed Integrated Circuit Hardware Description Language) and Verilog. Those skilled in the art will also appreciate that hardware circuits implementing such logic method flows can be readily obtained by simply performing logical programming of the method flows in any of the above hardware description languages and programming them into integrated circuits.

A controller may be implemented in any suitable manner. For example, the controller may take the form of a microprocessor or processor together with a computer-readable medium storing computer-readable program code (such as software or firmware) executable by the (micro)processor, logic gates, switches, an Application Specific Integrated Circuit (ASIC), a programmable logic controller, or an embedded microcontroller. Examples of controllers include, but are not limited to, the following microcontrollers: ARC 625D, Atmel AT91SAM, Microchip PIC18F26K20, and Silicon Labs C8051F320. A memory controller may also be implemented as part of control logic of a memory. Those skilled in the art will also appreciate that, in addition to implementing a controller purely in computer-readable program code, identical functionality can be achieved by logically programming method steps such that the controller is implemented in the form of logic gates, switches, ASICs, programmable logic controllers, embedded microcontrollers, or the like. Such a controller can therefore be considered a hardware component, and apparatuses included therein for implementing various functions can also be considered structures within the hardware component. Alternatively, apparatuses for implementing various functions can even be considered both software modules implementing a method and structures within a hardware component.

The systems, apparatuses, modules, or units illustrated in the foregoing embodiments may be specifically implemented by computer chips or entities, or by products having certain functions. A typical implementation device is a server system. Of course, this application does not exclude that, with future developments in computer technology, computers implementing the functions of the foregoing embodiments may be, for example, personal computers, laptop computers, in-vehicle human-machine interaction devices, cellular phones, camera phones, smartphones, personal digital assistants, media players, navigation devices, email devices, game consoles, tablet computers, wearable devices, or any combination of these devices.

Although one or more embodiments of the present specification provide method operation steps as described in the embodiments or flowcharts, more or fewer operation steps may be included based on routine or non-inventive means. The order of steps enumerated in the embodiments is merely one of many possible execution orders and does not represent the only execution order. During actual execution by an apparatus or terminal product, execution may proceed sequentially according to the method shown in the embodiments or accompanying drawings, or in parallel (for example, in a parallel processor or multi-threaded processing environment, or even a distributed data processing environment). The terms "comprise," "include," or any other variations thereof are intended to encompass non-exclusive inclusion, such that a process, method, product, or device that includes a series of elements includes not only those elements but also other elements not expressly listed, or further includes elements inherent to such process, method, product, or device. Without further limitation, the presence of additional identical or equivalent elements in a process, method, product, or device that includes the stated elements is not excluded. For example, if terms such as "first" and "second" are used to denote names, they do not imply any specific order.

For convenience of description, the above apparatus has been described in terms of various modules divided by function. Of course, when implementing one or more embodiments of the present specification, the functions of each module may be implemented in the same or multiple software and/or hardware components, or modules implementing the same function may be implemented by combinations of multiple sub-modules or sub-units. The apparatus embodiments described above are merely illustrative. For example, the division of units is merely a logical functional division; other divisions may be used in actual implementation, such as combining or integrating multiple units or components into another system, or omitting or not executing some features. Furthermore, mutual coupling, direct coupling, or communication connections shown or discussed may be indirect coupling or communication connections through some interfaces, apparatuses, or units, and may be electrical, mechanical, or of other forms.

The present disclosure is described with reference to flowcharts and/or block diagrams of methods, apparatuses (systems), and computer program products according to embodiments of the present disclosure. It should be understood that each flow and/or block in the flowcharts and/or block diagrams, as well as combinations of flows and/or blocks in the flowcharts and/or block diagrams, can be implemented by computer program instructions. These computer program instructions may be provided to a processor of a general-purpose computer, special-purpose computer, embedded processor, or other programmable data processing equipment to produce a machine, such that the instructions executed by the processor of the computer or other programmable data processing equipment create means for implementing the functions specified in one or more flows of the flowcharts and/or one or more blocks of the block diagrams.

These computer program instructions may also be stored in a computer-readable memory capable of directing a computer or other programmable data processing equipment to operate in a particular manner, such that the instructions stored in the computer-readable memory produce an article of manufacture including instruction means that implement the functions specified in one or more flows of the flowcharts and/or one or more blocks of the block diagrams.

These computer program instructions may also be loaded onto a computer or other programmable data processing equipment to cause a series of operational steps to be performed on the computer or other programmable equipment to produce a computer-implemented process, such that the instructions executed on the computer or other programmable equipment provide steps for implementing the functions specified in one or more flows of the flowcharts and/or one or more blocks of the block diagrams.

In a typical configuration, a computing device includes one or more processors (CPUs), input/output interfaces, network interfaces, and memory.

The memory may include non-persistent memory in computer-readable media, random access memory (RAM), and/or non-volatile memory, such as read-only memory (ROM) or flash RAM. Memory is an example of a computer-readable medium.

Computer-readable media include persistent and non-persistent, removable and non-removable media that can implement information storage by any method or technology. Information may be computer-readable instructions, data structures, program modules, or other data. Examples of computer storage media include, but are not limited to, Phase-Change RAM (PRAM), Static Random Access Memory (SRAM), Dynamic Random Access Memory (DRAM), other types of Random Access Memory (RAM), Read-Only Memory (ROM), Electrically Erasable Programmable Read-Only Memory (EEPROM), flash memory or other memory technologies, Compact Disc Read-Only Memory (CD-ROM), Digital Versatile Disc (DVD) or other optical storage, magnetic cassettes, magnetic tape or magnetic disk storage, graphene storage or other magnetic storage devices, or any other non-transmission medium that can be used to store information accessible by a computing device. As defined herein, computer-readable media do not include transitory computer-readable media, such as modulated data signals and carrier waves.

Those skilled in the art will appreciate that one or more embodiments of the present specification may be provided as methods, systems, or computer program products. Accordingly, one or more embodiments of the present specification may take the form of entirely hardware embodiments, entirely software embodiments, or embodiments combining software and hardware aspects. Furthermore, one or more embodiments of the present specification may take the form of computer program products embodied on one or more computer-usable storage media (including but not limited to disk storage, CD-ROM, optical storage, and the like) having computer-usable program code embodied therein.

One or more embodiments of the present specification may be described in the general context of computer-executable instructions executed by a computer, such as program modules. Generally, program modules include routines, programs, objects, components, data structures, and the like that perform particular tasks or implement particular abstract data types. One or more embodiments of the present specification may also be practiced in distributed computing environments where tasks are performed by remote processing devices linked through a communications network. In a distributed computing environment, program modules may be located in both local and remote computer storage media including storage devices.

The various embodiments in the present specification are described in a progressive manner, and identical or similar parts among the embodiments may be referenced to each other; each embodiment focuses on differences from other embodiments. In particular, system embodiments are described relatively simply because they are substantially similar to method embodiments; for relevant details, reference may be made to portions of the method embodiments. In the description of the present specification, descriptions referencing terms such as "one embodiment," "some embodiments," "example," "specific example," or "some examples" mean that specific features, structures, materials, or characteristics described in connection with that embodiment or example are included in at least one embodiment or example of the present specification. In the present specification, schematic representations of the above terms do not necessarily refer to the same embodiment or example. Furthermore, the specific features, structures, materials, or characteristics described may be combined in any suitable manner in any one or more embodiments or examples. Additionally, those skilled in the art may combine and integrate different embodiments or examples and features of different embodiments or examples described in the present specification, provided they are not mutually contradictory.

The foregoing descriptions are merely one or more embodiments of the present specification and are not intended to limit the one or more embodiments of the present specification. Various modifications and variations of the one or more embodiments of the present specification may occur to those skilled in the art. Any modifications, equivalent substitutions, improvements, and the like made within the spirit and principles of the present specification shall be encompassed within the scope of the claims.

## Claims

1. A management method for a blockchain system, the method comprising:
receiving, by a first blockchain system from a client, a first transaction, wherein a first rollup contract comprising a first method function is deployed in the first blockchain system, the contract state of the first rollup contract stores global management information of N second blockchain systems, the first transaction is for invoking the first method function and includes identification information of an i-th second blockchain system;
executing, by the first blockchain system, the first method function based on the first transaction to: determine, based on the identification information of the i-th second blockchain system, at least one sovereignty migration record from global management information of the i-th second blockchain system, wherein the sovereignty migration record includes identification information of a third blockchain system, and return the at least one sovereignty migration record to the client;
receiving, by the third blockchain system from the client, a second transaction, wherein a second rollup contract comprising a second method function is deployed in the third blockchain system, the contract state of the second rollup contract includes management information of the i-th second blockchain system, the second transaction is for invoking the second method function and includes the identification information of the i-th second blockchain system; and
executing, by the third blockchain system, the second method function based on the second transaction to: determine, based on the identification information of the i-th second blockchain system, at least one location index from the management information of the i-th second blockchain system, determine, based on the at least one location index, at least one transaction sequence stored in the third blockchain system, wherein the at least one transaction sequence belongs to a transaction batch submitted during a period when the i-th second blockchain system uses the third blockchain system as its corresponding upper-layer blockchain system, and return the at least one transaction sequence to the client.

2. The method according to claim 1, wherein the contract state of the first rollup contract stores registration information of the N second blockchain systems, and the registration information of the i-th second blockchain system includes a genesis block; and
wherein the executing, by the first blockchain system, the first method function based on the first transaction further comprises: returning the genesis block of the i-th second blockchain system to the client.

3. The method according to claim 1, wherein the sovereignty migration record further includes a first batch number corresponding to a first transaction batch submitted during the period when the i-th second blockchain system uses the third blockchain system as its corresponding upper-layer blockchain system; the first transaction further includes a starting batch number corresponding to a plurality of transaction batches to be recovered; and the first batch number included in each of the at least one sovereignty migration record is not less than the starting batch number.

4. The method according to claim 1, wherein the location index includes a batch number of a transaction batch to which its corresponding transaction sequence belongs; the second transaction further includes a starting batch number corresponding to a plurality of transaction batches to be recovered; and the batch number included in each of the at least one location index is not less than the starting batch number.

5. The method according to claim 1, wherein the first rollup contract further comprises a third method function, and the third blockchain system belongs to the remaining N-1 second blockchain systems; and
the method further comprises:
receiving, by the first blockchain system from the third blockchain system, a third transaction for invoking the third method function, wherein the third transaction includes a transaction sequence included in a first transaction batch submitted by the third blockchain system, a batch number of the first transaction batch, and a pre-state root and a post-state root corresponding to the first transaction batch; and
executing, by the first blockchain system, the third method function based on the third transaction to: store the transaction sequence included in the first transaction batch; add a location index in global management information of the third blockchain system based on the batch number of the first transaction batch, wherein the location index is used to indicate a storage location of the transaction sequence included in the first transaction batch in the first blockchain system; and update fourth state data of the third blockchain system based on the pre-state root and post-state root corresponding to the first transaction batch.

6. The method according to claim 1, wherein the second rollup contract further comprises a fourth method function, and the third blockchain system belongs to the remaining N-1 second blockchain systems; and
the method further comprises:
receiving, by the third blockchain system from the i-th second blockchain system, a fourth transaction for invoking the fourth method function, wherein the fourth transaction includes a transaction sequence included in a second transaction batch submitted by the i-th second blockchain system, a batch number of the second transaction batch, and a pre-state root and a post-state root of the second transaction batch; and
executing, by the third blockchain system, the fourth method function based on the fourth transaction to: store the transaction sequence included in the second transaction batch; add a location index in the management information of the i-th second blockchain system based on the batch number of the second transaction batch, wherein the location index is used to indicate a storage location of the transaction sequence included in the second transaction batch in the third blockchain system; and update second state data of the i-th second blockchain system based on the pre-state root and post-state root corresponding to the second transaction batch.

7. The method according to claim 6, wherein the location index comprises: the batch number of the second transaction batch, a block number of a block to which the fourth transaction belongs in the third blockchain system, and a transaction index of the fourth transaction within that block.

8. The method according to any one of claims 1 to 7, wherein the contract state of the first rollup contract stores registration information of the N second blockchain systems, and the first rollup contract further comprises a fifth method function; and
the method further comprises:
receiving, by the first blockchain system, a fifth transaction for invoking the fifth method function, wherein the fifth transaction requests that the third blockchain system serve as the upper-layer blockchain system corresponding to the i-th second blockchain system;
executing, by the first blockchain system, the fifth method function based on the fifth transaction to: add a sovereignty migration record in global management information of the i-th second blockchain system and generate a sovereignty migration event, wherein the sovereignty migration record includes the identification information of the third blockchain system, and the sovereignty migration event includes the identification information of the i-th second blockchain system and the identification information of the third blockchain system; and
setting, by the third blockchain system based on the sovereignty migration event and by utilizing the registration information of the i-th second blockchain system, a second rollup contract corresponding to the i-th second blockchain system in the third blockchain system.

9. The method according to claim 8, wherein the fifth transaction and the sovereignty migration record include a first batch number corresponding to a first transaction batch submitted during the period when the i-th second blockchain system uses the third blockchain system as its corresponding upper-layer blockchain system.

10. The method according to claim 9, wherein the first rollup contract further comprises a sixth method function; and
the method further comprises:
receiving, by the first blockchain system, a sixth transaction for invoking the sixth method function, wherein the sixth transaction requests that a fourth blockchain system no longer serve as the upper-layer blockchain system corresponding to the i-th second blockchain system after a third transaction batch submitted by the i-th second blockchain system enters a finality state, and the fourth blockchain system is a blockchain system different from the third blockchain system among the first blockchain system and the remaining N-1 second blockchain systems;
executing, by the first blockchain system, the sixth method function based on the sixth transaction to: generate a sovereignty termination event, wherein the sovereignty termination event includes a batch number of the third transaction batch and identification information of the i-th second blockchain system and the fourth blockchain system; and
invalidating, by the fourth blockchain system based on the sovereignty termination event and after confirming that the third transaction batch has entered a finality state, the registration information of the i-th second blockchain system in a third rollup contract deployed therein.

11. A management method for a blockchain system, the method being executed by a first blockchain system in which a first rollup contract is deployed, wherein the contract state of the first rollup contract stores global management information of N second blockchain systems, and the first rollup contract includes a first method function, the method comprising:
receiving, from a client, a first transaction for invoking the first method function, wherein the first transaction includes identification information of an i-th second blockchain system; and
executing the first method function based on the first transaction to: determine, based on the identification information of the i-th second blockchain system, at least one sovereignty migration record from global management information of the i-th second blockchain system, wherein the at least one sovereignty migration record includes identification information of a third blockchain system, and return the at least one sovereignty migration record to the client, thereby causing the client to obtain, based on the at least one sovereignty migration record, at least one transaction sequence from the third blockchain system, wherein the at least one transaction sequence belongs to a transaction batch submitted during a period when the i-th second blockchain system uses the third blockchain system as its corresponding upper-layer blockchain system.

12. The method according to claim 11, wherein the contract state of the first rollup contract stores registration information of the N second blockchain systems, and the registration information of the i-th second blockchain system includes a genesis block; and
wherein the executing the first method function based on the first transaction further comprises: returning the genesis block of the i-th second blockchain system to the client.

13. The method according to claim 11, wherein the sovereignty migration record further includes a first batch number corresponding to a first transaction batch submitted during the period when the i-th second blockchain system uses the third blockchain system as its corresponding upper-layer blockchain system; the first transaction further includes a starting batch number corresponding to a plurality of transaction batches to be recovered; and the first batch number in the at least one sovereignty migration record is not less than the starting batch number.

14. The method according to claim 11, wherein the first rollup contract further comprises a third method function, and the third blockchain system belongs to the remaining N-1 second blockchain systems; and
the method further comprises:
receiving, from the third blockchain system, a third transaction for invoking the third method function, wherein the third transaction includes a transaction sequence included in a first transaction batch submitted by the third blockchain system, a batch number of the first transaction batch, and a pre-state root and a post-state root corresponding to the first transaction batch; and
executing the third method function based on the third transaction to: store the transaction sequence included in the first transaction batch; add a location index in global management information of the third blockchain system based on the batch number of the first transaction batch, wherein the location index is used to indicate a storage location of the transaction sequence included in the first transaction batch in the first blockchain system; and update fourth state data of the third blockchain system based on the pre-state root and post-state root corresponding to the first transaction batch.

15. The method according to any one of claims 11 to 14, wherein the contract state of the first rollup contract stores registration information of the N second blockchain systems, and the first rollup contract further comprises a fifth method function; and
the method further comprises:
receiving a fifth transaction for invoking the fifth method function, wherein the fifth transaction requests that the third blockchain system serve as the upper-layer blockchain system corresponding to the i-th second blockchain system; and
executing the fifth method function based on the fifth transaction to: add a sovereignty migration record in global management information of the i-th second blockchain system and generate a sovereignty migration event, wherein the sovereignty migration record includes the identification information of the third blockchain system, and the sovereignty migration event includes the identification information of the i-th second blockchain system and the identification information of the third blockchain system, thereby causing the third blockchain system to set, by utilizing the registration information of the i-th second blockchain system, a second rollup contract corresponding to the i-th second blockchain system in the third blockchain system.

16. A blockchain node in a first blockchain system, wherein a first rollup contract is deployed in the first blockchain system, the first rollup contract includes a first method function, and the contract state of the first rollup contract stores global management information of N second blockchain systems, the blockchain node comprising:
a transaction receiving unit configured to receive, from a client, a first transaction for invoking the first method function, wherein the first transaction includes identification information of an i-th second blockchain system; and
a transaction execution unit configured to execute the first method function based on the first transaction to: determine, based on the identification information of the i-th second blockchain system, at least one sovereignty migration record from global management information of the i-th second blockchain system, wherein the at least one sovereignty migration record includes identification information of a third blockchain system, and return the at least one sovereignty migration record to the client, thereby causing the client to obtain, based on the at least one sovereignty migration record, at least one transaction sequence from the third blockchain system, wherein the at least one transaction sequence belongs to a transaction batch submitted during a period when the i-th second blockchain system uses the third blockchain system as its corresponding upper-layer blockchain system.
